# EUROPÄISCHE PATENTANMELDUNG

(11) **EP 3 608 831 A1**
(43) Veröffentlichungstag der Anmeldung: **12.02.2020**
(21) Anmeldenummer: 19185970.1
(22) Anmeldetag: 12.07.2019
(51) Int. Cl.: G06K 9/00

(54) **VERFAHREN ZUR BEREITSTELLUNG EINES AUSWERTUNGSMITTELS FÜR WENIGSTENS EIN OPTISCHES ANWENDUNGSSYSTEM EINER MIKROSKOPBASIERTEN ANWENDUNGSTECHNOLOGIE**

(30) Priorität: 09.08.2018 EP 18188286
(71) Anmelder: Olympus Soft Imaging Solutions GmbH, 48149 Münster (DE)
(72) Erfinder: Krüger, Daniel, 10119 Berlin (DE); Wördemann, Mike, 48346 Ostbevern (DE); Diepenbrock, Stefan, 48151 Münster (DE)
(74) Vertreter: Patentanwälte Bals & Vogel

(57) **Zusammenfassung**

Die Erfindung betrifft ein Verfahren zur Bereitstellung eines Auswertungsmittels (60) für wenigstens ein optisches Anwendungssystem (5) einer mikroskopbasierten Anwendungstechnologie,
wobei die nachfolgenden Schritte durchgeführt werden, insbesondere jeweils durch ein optisches Trainingssystem (4):
- Durchführen einer Eingabeerfassung (101) wenigstens einer Probe (2) gemäß der Anwendungstechnologie, um anhand der Eingabeerfassung (101) wenigstens eine Eingabeaufzeichnung (110) der Probe (2) zu erhalten,
- Durchführen einer Zielerfassung (102) der Probe (2) gemäß einer Trainingstechnologie, um anhand der Zielerfassung (102) wenigstens eine Zielaufzeichnung (112) der Probe (2) zu erhalten, wobei die Trainingstechnologie sich von der Anwendungstechnologie zumindest dadurch unterscheidet, dass eine Zusatzinformation (115) über die Probe (2) bereitstellt wird,
- Anlernen (130) des Auswertungsmittels (60) zumindest anhand der Eingabeaufzeichnung (110) und der Zielaufzeichnung (112), um eine Anlerninformation (200) des Auswertungsmittels (60) zu erhalten,
dass bei der Eingabeerfassung (101) und/oder bei der Zielerfassung (102) verschiedene Probenpositionen automatisiert erfasst werden, sodass insbesondere die Anlerninformation (200) für eine kontinuierliche Probenrelativverschiebung zur Ermittlung der Zusatzinformation (115) angelernt wird.

## Beschreibung

Die vorliegende Erfindung betrifft ein Verfahren zur Bereitstellung eines Auswertungsmittels für wenigstens ein optisches Anwendungssystem einer mikroskopbasierten Anwendungstechnologie. Ferner bezieht sich die Erfindung auf ein System, ein Computerprogramm sowie ein computerlesbares Medium.

Aus dem Stand der Technik ist es bekannt, dass ein sogenannter Ground Truth zum Training von Anlernmethoden aus dem Bereich des maschinellen Lernens durch aufwendige Verfahren gewonnen wird. Insbesondere eine Segmentierung von Proben zur Ermittlung des Ground Truth kann dabei sehr aufwendig und oft nur durch manuelle Eingriffe erfolgen. So müssen dabei häufig Daten von verschiedenen Datenquellen zusammengebracht und aufwendig bearbeitet werden.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Möglichkeit zur Nutzung von Anlernmethoden bei mikroskopischen Systemen vorzuschlagen.

Die Veröffentlichungen CHRISTIANSEN, ERIC M. ET AL.: "In Silico Labeling: Predicting Fluorescent Labels in Unlabeled Images", CELL, Bd. 173, Nr. 3, Seiten 792-803, 19. April 2018, Chawin Ounkomol ET AL: "Label-free prediction of three-dimensional fluorescence images from transmitted light microscopy", bioRxiv, 23. Mai 2018 und FRANCESCO LO CONTI ET AL: "A regularized deep learning approach for image deblurring", INTERNET OF THINGS AND MACHINE LEARNING, 17. Oktober 2017 zeigen gattungsgemäße Verfahren.

Die voranstehende Aufgabe wird gelöst durch ein Verfahren mit den Merkmalen des Anspruchs 1, ein System mit den Merkmalen des Anspruchs 12, ein Computerprogramm mit den Merkmalen des Anspruchs 13, ein Computerprogramm mit den Merkmalen des Anspruchs 14 sowie durch ein computerlesbares Medium mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, den erfindungsgemäßen Computerprogrammen sowie dem erfindungsgemäßen computerlesbaren Medium, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Bereitstellung (wenigstens) eines Auswertungsmittels für wenigstens ein optisches Anwendungssystem einer mikroskopbasierten Anwendungstechnologie.

Hierbei ist insbesondere vorgesehen, dass die nachfolgenden Schritte durchgeführt werden, bevorzugt jeweils durch ein optisches Erfassungssystem, insbesondere Trainingssystem:
- Durchführen einer Eingabeerfassung wenigstens einer Probe gemäß der Anwendungstechnologie, um anhand der Eingabeerfassung wenigstens eine Eingabeaufzeichnung der (wenigstens einen) Probe zu erhalten,
- Durchführen einer Zielerfassung der (wenigstens einen) Probe gemäß einer Trainingstechnologie, um anhand der Zielerfassung wenigstens eine Zielaufzeichnung der (wenigstens einen) Probe zu erhalten, wobei vorzugsweise die Trainingstechnologie sich von der Anwendungstechnologie zumindest dadurch unterscheidet, dass eine Zusatzinformation über die (wenigstens eine) Probe durch die Trainingstechnologie bereitgestellt wird, und vorzugsweise aus der Zielaufzeichnung ermittelt wird,
- Anlernen des Auswertungsmittels zumindest anhand der Eingabeaufzeichnung und der Zielaufzeichnung, um wenigstens eine Anlerninformation des Auswertungsmittels zu erhalten.

Die voranstehenden Schritte können dabei in beliebiger oder in der angegebenen Reihenfolge und ggf. auch einzeln wiederholt ausgeführt werden. Bevorzugt werden die Schritte dabei vollständig oder überwiegend automatisiert, besonders bevorzugt ohne manuellen Eingriff durchgeführt. Auch ist die zumindest teilweise manuelle Durchführung von Schritten denkbar, insbesondere anwendungssystemseitig.

Es kann von Vorteil bei einem erfindungsgemäßen Verfahren sein, wenn bei der Eingabeerfassung und/oder bei der Zielerfassung verschiedene Probenpositionen automatisiert erfasst werden, sodass insbesondere die Anlerninformation für eine kontinuierliche Probenrelativverschiebung zur Ermittlung der Zusatzinformation angelernt wird. Es kann weiter optional vorgesehen sein, dass durch die Erfassung der verschiedenen Probenpositionen die Anlerninformation für eine kontinuierliche Probenrelativverschiebung zur Ermittlung der Zusatzinformation angelernt wird, wobei die Eingabeerfassung und die Zielerfassung jeweils als trainingssystemseitige Erfassung durch ein optisches Trainingssystem durchgeführt werden, und insbesondere wobei die Anwendungstechnologie und Trainingstechnologie als eine Mikroskopie oder eine Durchflusszytometrie ausgeführt ist.

Es kann vorgesehen sein, dass die Trainingstechnologie sich von der Anwendungstechnologie zumindest dadurch unterscheidet, dass eine Zusatzinformation über die (wenigstens eine) Probe durch die Trainingstechnologie bereitgestellt wird (d. h. bestimmt wird oder verfügbar ist). Darunter wird verstanden, dass bei dem Anwendungssystem, welches die Anwendungstechnologie in identischer oder ähnlicher Weise bereitstellt wie das Trainingssystem, die Zusatzinformation nicht anhand der Anwendungstechnologie ermittelt wird, sondern ggf. nur anhand des Auswertungsmittels zumindest näherungsweise, bestimmt wird. Dabei kann die Anwendungstechnologie nicht in der Lage sein oder nur grundsätzlich in der Lage sein, die Zusatzinformation zu bestimmen. Bspw. ist die Bestimmung der Zusatzinformation durch die Anwendungstechnologie zeitaufwendiger als durch die Trainingstechnologie, sodass die Zusatzinformation im erfindungsgemäßen Verfahren nicht mittels der Anwendungstechnologie bereitgestellt wird. Optional kann die Trainingstechnologie sich von der Anwendungstechnologie zumindest dadurch unterscheiden, dass die Zusatzinformation dadurch bereitgestellt wird, dass eine Belichtungszeit bei der Zielerfassung länger als bei der Eingabeerfassung verwendet wird. Somit kann die Zusatzinformation als eine zusätzliche Bildinformation (aufgrund der längeren Belichtungszeit) ausgeführt sein. Insbesondere bei der (anwendungssystemseitigen) kontinuierlichen Probenrelativverschiebung kann es notwendig sein, kürzere Belichtungszeiten zu verwenden, sodass optional durch die Zusatzinformation erst der Einsatz der kontinuierlichen Probenrelativverschiebung möglich gemacht werden kann.

Die Anwendungstechnologie kann bei dem Trainingssystem z. B. (anders als beim Anwendungssystem) auch dadurch implementiert sein, dass es synthetisch emuliert wird und/oder durch ein neuronales Netz bereitgestellt wird. Dies ermöglicht es auch, flexibel verschiedene Anwendungstechnologien z. B. softwaregestützt beim Trainingssystem bereitzustellen, für verschiedene Durchführungen des Anlernens.

Es kann von Vorteil bei einem erfindungsgemäßen Verfahren sein, wenn bei der Eingabeerfassung und/oder bei der Zielerfassung verschiedene Probenpositionen automatisiert erfasst werden, sodass insbesondere die Anlerninformation für eine kontinuierliche Probenrelativverschiebung zur Ermittlung der Zusatzinformation angelernt wird. Die verschiedenen Probenpositionen können z. B. durch eine automatisierte schrittweise und/oder kontinuierliche Probenrelativverschiebung (auch: relative Probenbewegung) erhalten werden. Das Anlernen zur Ermittlung der Zusatzinformation ist insbesondere dazu geeignet, die Anlerninformation so zu bestimmen, dass das auf diese Weise angelernte Auswertungsmittel bei einer anschließenden anwendungssystemseitigen Auswertung zumindest näherungsweise die Zusatzinformation bestimmt. Hierzu werden bspw. Methoden des maschinellen Lernens für das Anlernen und/oder eine Erfassung gemäß der Anwendungstechnologie durch das Anwendungssystem zur Ermittlung von Eingabedaten für die Auswertung genutzt.

Eine Probenrelativverschiebung (insbesondere ausgeführt als eine Probenbewegung und/oder Erfassungssystembewegung zur Veränderung der Probenposition) kann dabei als eine Verschiebung der Probe relativ zum Erfassungssystem (z. B. zum Trainings- und/oder Anwendungssystem, insbesondere zu einer Erfassungsoptik und/oder Detektionsvorrichtung) verstanden werden. Diese kann z. B. dadurch bewirkt werden, dass die Detektionsvorrichtung und/oder die Erfassungsoptik gegenüber der Probe bewegt wird, oder umgekehrt. Entsprechend kann auch eine relative Bewegung der Probe als eine Bewegung verstanden werden, bei welcher sich entweder die Probe gegenüber dem Erfassungssystem bewegt, oder umgekehrt. Selbstverständlich können auch sowohl die Probe als auch das Erfassungssystem bewegt werden. Es kommt insbesondere darauf an, dass sich der Probenbereich verändert, welcher erfasst wird. Die Nutzung eines motorisierten Probentisches zur direkten Bewegung der Probe zur Erzielung der Probenrelativverschiebung hat dabei z. B. den Vorteil, dass hierdurch eine große Anzahl von Proben oder Objekten der Probe über einen weiten Bereich erfasst werden kann sowie ggf. bei einer leichten Probe weniger Masse bewegt werden muss. Die Bewegung eines Teils des Erfassungssystems, wie der Erfassungsoptik oder der Detektionsvorrichtung, hat den Vorteil, dass die Probe selber keinen Beschleunigungen ausgesetzt wird und damit insbesondere bei einer Detektionsvorrichtung geringer Masse vorteilhaft ist. Beides kann ggf. manuell erfolgen, um den Aufwand einer Motorisierung zu vermeiden.

Insbesondere wird durch die Erfassung verschiedener Probenpositionen bei der wenigstens einen Probe die Anlerninformation für eine kontinuierliche Probenrelativverschiebung, insbesondere Probenverschiebung oder Probenbewegung, zur Ermittlung der Zusatzinformation angelernt. Dies bedeutet, dass das Anlernen derart (bspw. durch die Nutzung der Probenrelativverschiebung und/oder Auswertung der verschiedenen Probenpositionen) erfolgt, dass durch das so angelernte Auswertungsmittel eine (anschließende und/oder erneute) kontinuierliche Probenrelativverschiebung (der oder bevorzugt wenigstens einer anderen Probe) genutzt werden kann, um die Zusatzinformation zumindest näherungsweise zu ermitteln. Diese kontinuierliche Probenrelativverschiebung erfolgt bspw. bei einem Anwendungssystem bei wenigstens einer weiteren Probe nachdem das Anlernen vollständig erfolgt ist und/oder das angelernte Auswertungsmittel für das Anwendungssystem bereitgestellt wird. Die kontinuierliche Probenrelativverschiebung ist dabei als eine Erfassungsmethode zu verstehen, bei welcher eine Probe kontinuierlich (z. B. transversal) bewegt wird, sodass es, insbesondere abhängig von der Bewegungsgeschwindigkeit und der Erfassungsgeschwindigkeit und/oder der Belichtungszeit, zu einer Beeinflussung der Erfassung durch die Bewegung, wie eine Bewegungsunschärfe und/oder Rauschen und/oder anderer Störeinflüsse, kommen kann. Vorteilhafterweise wird die kontinuierliche Probenrelativverschiebung beim Anwendungssystem für Proben durchgeführt, welche zwar zur beim Trainingssystem erfassten wenigstens einen Probe unterschiedlich ausgeführt, ggf. jedoch gleichartig zu dieser ausgebildet sind. Alternativ kann es auch möglich sein, dass beim Anwendungssystem nur eine schrittweise Probenrelativverschiebung oder keine Probenrelativverschiebung durchgeführt wird. In diesem Fall ergibt sich gleichwohl ein Vorteil durch die (schrittweise oder kontinuierliche) Probenrelativverschiebung beim erfindungsgemäßen Verfahren bzw. beim Trainingssystem, da hierdurch eine große Anzahl von Trainingsdaten in kurzer Zeit ermittelt werden können.

Optional ist es denkbar, dass bei der Eingabeerfassung und/oder bei der Zielerfassung verschiedene Probenpositionen automatisiert erfasst werden, wobei die verschiedenen Probenpositionen durch eine automatisierte schrittweise und/oder kontinuierliche Probenrelativverschiebung erhalten werden, sodass die Anlerninformation für eine kontinuierliche Probenrelativverschiebung zur Ermittlung der Zusatzinformation angelernt wird. Dabei kann die Anlerninformation so bestimmt werden, dass das auf diese Weise angelernte Auswertungsmittel bei einer anschließenden anwendungssystemseitigen Auswertung zumindest näherungsweise die Zusatzinformation bestimmt. Das Anlernen kann dadurch erfolgen, dass für das Auswertungsmittel die Anlerninformation durch Methoden des maschinellen Lernens bestimmt werden, wobei die Anlerninformation ein Klassifikator oder ein Modell oder eine Gewichtung für das Auswertungsmittel sein kann.

Es kann ferner möglich sein, dass vor jeder Eingabe- und Zielerfassung die Probenposition geändert wird und/oder eine Probenrelativverschiebung stattfindet. Bspw. erfolgt zunächst eine erste Eingabeerfassung und Zielerfassung an einer ersten Position der Probe, anschließend eine zweite Eingabeerfassung und Zielerfassung an einer zweiten Position der Probe, usw. Erst nach der Durchführung sämtlicher Eingabe- und Zielerfassungen an den verschiedenen Probenpositionen kann ggf. der Schritt des Anlernens durchgeführt werden.

Das Anlernen erfolgt z. B. dadurch, dass für das Auswertungsmittel die Anlerninformation bestimmt wird. Dies kann vorteilhafterweise durch Methoden des maschinellen Lernens, insbesondere Deep-Learnings, erfolgen. Entsprechend kann die Anlerninformation ein Klassifikator oder ein Modell oder eine Gewichtung für das Auswertungsmittel sein. Es kann daher zur Bereitstellung des angelernten Auswertungsmittels für das Anwendungssystem genügen, dass die Anlerninformation an das Anwendungssystem durch einen Datenaustausch übertragen wird. Dies ist insbesondere dann möglich, wenn das Anwendungssystem bereits ein Auswertungsmittel oder ein dazu ähnliches Computerprogramm aufweist, welches die Anlerninformation nutzen kann und somit anhand der übertragenen Anlerninformation ebenfalls zu einem "angelernten" Auswertungsmittel parametrisiert wird.

Ein optisches Erfassungssystem, wie das Anwendungs- und/oder Trainingssystem, kann eine Probenerfassung durch ein optisches Vergrößerungsverfahren zur Zell- und/oder Probendarstellung und/oder durch eine Mikroskopie und/oder durch eine Durchflusszytometrie bereitstellen. Beispielhaft kann das Erfassungssystem als ein Mikroskopsystem zur Durchlichtmikroskopie ausgeführt sein. Insbesondere kann das Anwendungs- und/oder Trainingssystem auch nur eine Mikroskopie und/oder keine Durchflusszytometrie bereitstellen.

Eine Probenerfassung kann dadurch erfolgen, dass mittels des Erfassungssystems wenigstens eine Erfassungsinformation über die Probe ermittelt wird. Die Erfassungsinformation kann z. B. eine trainingssystemseitige Eingabeaufzeichnung oder eine (ggf. gleichartig ausgeführte) anwendungssystemseitige Erfassungsinformation sein. Diese kann anschließend durch eine zuvor angelernte Auswertung mittels eines Auswertungsmittels (z. B. anhand Methoden des maschinellen Lernens und/oder Deep Learning Methoden und/oder künstlicher Intelligenz und/oder neuronale Netze) insbesondere bei einem Anwendungssystem ausgewertet werden, um eine Ergebnisinformation über die Probe zu bestimmen. Je nach Anlernen (Training) eines Auswertungsmittels zur Auswertung kann (bei Nutzung ausreichender Trainingsdaten) die Ergebnisinformation zumindest näherungsweise zusätzliche Informationen über die Probe bereitstellen, welche sonst nur mit erheblich aufwendigen Verfahren zugänglich wären. Somit kann die Ergebnisinformation als Zusatzinformation über die Probe ausgeführt sein oder eine solche Zusatzinformation schätzen bzw. vorhersagen. Bspw. kann die Auswertung auch eine Auswertemethode bereitstellen, wie ein probenspezifisches Assay.

Es kann optional vorgesehen sein, dass durch das Anlernen das Auswertungsmittel bzw. die Anlerninformation angelernt wird, aus der Eingabeaufzeichnung und/oder aus der anwendungssystemseitigen Erfassungsinformation die Zielaufzeichnung und/oder die Zusatzinformation zu schätzen. Hierzu kann z. B. eine Gewichtung von Neuronen bei einem neuronalen Netz des Auswertungsmittels angepasst werden, und diese Anpassung durch die Anlerninformation gespeichert werden.

Außerdem ist es optional möglich, dass bei der Eingabeerfassung und/oder bei der anwendungssystemseitigen Erfassung eine gepulste Beleuchtung der Probe genutzt wird, welche in Bezug auf die Aufnahme eines Kamerasensors asynchron gepulst durchgeführt wird.

Weiter ist es optional möglich, dass die Eingabeaufzeichnung und/oder anwendungssystemseitige Erfassungsinformation der Probe wenigstens zwei aufgezeichnete Bilder der Probe aufweist, z. B. kurz aufeinander aufgenommene Transmissionsbilder der Probe, insbesondere bei einer kontinuierlichen Probenrelativverschiebung aufgenommen.

Es ist ebenfalls optional vorgesehen, dass ein Ground Truth direkt oder indirekt aus der Zielaufzeichnung bestimmt wird. Indirekt kann dies z. B. dadurch erfolgen, dass ein Ergebnis einer Auswertung mittels der Anlerninformation oder des angelernten Auswertungsmittels oder eines anderen neuronalen Netzes (als Ergebnisinformation) als Ground Truth genutzt wird. Die Anlerninformation und/oder das angelernte Auswertungsmittel und/oder das Netz ist z. B. zuvor mittels der Zielaufzeichnung angelernt worden, oder die Zielaufzeichnung wurde als Eingabe für die Auswertung genutzt, um die Ergebnisinformation daraus zu bestimmen.

Die Erfassungsinformation ist bspw. eine Bildaufzeichnung, insbesondere ein mikroskopisches Bild, der Probe. Die Bilddaten der Bildaufzeichnung können in Kombination mit der beschriebenen Auswertung besonders vorteilhaft genutzt werden, insbesondere wenn die Auswertung Methoden des überwachten Lernens nutzt und zum Anlernen große annotierte Trainingsdaten zur Verfügung stehen. Die Trainingsdaten können z. B. Eingabeaufzeichnungen und Zielaufzeichnungen, wie Erfassungsinformationen aus der Mikroskopie und/oder der Durchflusszytometrie sein. Insbesondere können dabei die Trainingsdaten (ggf. vollständig) automatisiert erzeugt werden, ohne dass es manuelle Eingriffe zur Annotation oder dergleichen benötigt. Dies eröffnet die Möglichkeit, das Auswertungsmittel (z. B. ein künstliches neuronales Netz) automatisiert und damit mit hoher Zeitersparnis mit großen Mengen Trainingsdaten zu trainieren. Das Auswertungsmittel kann dabei auch ein System von neuronalen Netzen umfassen.

Zum Anlernen kann es erforderlich sein, dass Erfassungsinformationen gemäß einer Anwendungstechnologie (nachfolgend kurz: Anwendungsdaten, insbesondere eine Eingabeaufzeichnung) und Erfassungsinformationen gemäß einer Trainingstechnologie (nachfolgend kurz: Expertendaten, insbesondere eine Zielaufzeichnung) zur Verfügung stehen. Die Anwendungsdaten können dabei auch aus einer anderen Quelle stammen als die Expertendaten. Auch ist es denkbar, dass die Anwendungs- und Expertendaten Informationen über dieselbe Probe und/oder denselben Probenbereich aufweisen. Insbesondere ist ein Informationsüberlappen bei beiden vorhanden. Die Anwendungsdaten können dabei solche Erfassungsinformationen aufweisen, wie sie auch bei einem Anwendungssystem erfasst werden. Die Expertendaten können beim Anwendungssystem ggf. nicht oder nur in geringerer Qualität und/oder langsamer erfasst werden. Auch ist es denkbar, dass die Expertendaten nicht oder nicht in gleicher Weise beim Anwendungssystem erfasst werden können, sondern ggf. nur bei einem Trainingssystem. Beide Systeme können dabei als Erfassungssysteme, wie Mikroskope, ausgebildet sein. Die Anwendungsdaten umfassen bspw. ein Stapel von Transmissionsbildern. Die Expertendaten können hingegen z. B. Fluoreszenzaufnahmen der Probe sein. Durch das Anlernen kann das Auswertungsmittel ggf. dafür angelernt werden, zusätzliche Informationen aus den Expertendaten in den Anwendungsdaten zu augmentieren. In anderen Worten kann durch die Auswertung anhand der Anwendungsdaten ohne Kenntnis der Expertendaten die Ergebnisinformation bestimmt werden, welche dann zumindest näherungsweise die Informationen der Expertendaten aufweist. Dies kann auch dann möglich sein, wenn das Anwendungssystem diese Anwendungsdaten mittels der Anwendungstechnologie erfasst, ohne darauf auf die Trainingstechnologie zurückzugreifen. Die Anwendungstechnologie ist z. B. eine Durchlichtmikroskopie und/oder eine mehrfarbige Mikroskopie, insbesondere lebender und/oder ungefärbter Zellen der Probe, und/oder dergleichen. Die Trainingstechnologie ist z. B. eine Fluoreszenzmikroskopie und/oder eine Segmentierung der Probe, insbesondere fixierter und/oder gefärbter Zellen, und/oder dergleichen. Sowohl die Experten- als auch die Anwendungsdaten können dabei vorteilhafterweise (z. B. beim Anlernen durch das Trainingssystem) automatisiert ohne manuellen Eingriff aufgenommen werden. Das Trainingssystem kann dabei (im Unterschied zum Anwendungssystem) sowohl die Anwendungs- als auch die Trainingstechnologie zur Erfassung der Erfassungsinformationen nutzen. Entscheidend kann dabei sein, dass die Aufnahme der Experten- und/oder Anwendungsdaten mit einer ausreichenden Geschwindigkeit erfolgt, um eine für das Anlernen ausreichende Datenmenge zu ermitteln. Das Anlernen kann anhand der Expertendaten (entsprechend als Ground Truth) und Anwendungsdaten z. B. so erfolgen, dass mittels Maschinellen Lernens eine Anlerninformation bestimmt wird. Diese Anlerninformation weist z. B. einen Klassifikator und/oder ein Modell und/oder eine Gewichtung und/oder eine Parametrisierung des Auswertungsmittels auf, welche somit das Ergebnis des Anlernens darstellen können. Die Anlerninformation kann anschließend durch das Auswertungsmittel (wie ein Computerprogramm) bei Anwendungssystemen genutzt werden, um anhand der durch das Anwendungssystem ermittelten Anwendungsdaten die angelernte Auswertung durchzuführen und/oder die Ergebnisinformation zu ermitteln. Das Auswertungsmittel wird hierzu bspw. durch eine Auswertevorrichtung, wie einen Computer, ausgeführt.

Insbesondere ist das beschriebene Verfahren nicht auf eine (klassische) Durchlichtmikroskopie als Anwendungstechnologie oder Trainingstechnologie beschränkt. So kann bspw. die Anwendungstechnologie oder Trainingstechnologie auch als eine Durchflusszytometrie ausgeführt sein. Es kann dabei für die Zellanalyse in der Durchflusszytometrie vorgesehen sein, dass Proben in einer Flüssigkeit an einer optischen Einrichtung aus Detektoren (z. B. Sensoren einer Detektionsvorrichtung) und/oder Beleuchtung vorbeigeführt werden, um auf dieser Weise Probeninformation (also z. B. die Eingabeaufzeichnung und/oder die Erfassungsinformationen) zu erhalten. Ein Vorteil dieser kontinuierlichen relativen Verschiebung zwischen Probe, bzw. Zellen der Probe, und der optischen Detektionsvorrichtung ist der vergleichsweise hohe Probendurchsatz durch die Möglichkeit, ohne wesentliche technische Nachteile die Beleuchtung und/oder die Aufnahme durch den Detektor kontinuierlich laufen zu lassen. Bei einer Ausführung in einem mikroskopischen Setup für adhärente Zellen kommt der Vorteil geringerer Beschleunigungskräfte dazu, welcher insbesondere bei der schonenden Lebenzellbeobachtung und der Vermeidung von Vibrationen der Probenflüssigkeit eine Rolle spielt. Denn bspw. bei Transmissionsbeleuchtungsverfahren kann letzteres zu unregelmäßigen Beleuchtungsveränderungen durch Oberflächenwellen führen, aber ggf. auch mechanischen Einfluss auf die physiologische Entwicklung insbesondere bei der Analyse lebender Spheroiden oder Organoiden bewirken.

Es kann möglich sein, dass das erfindungsgemäße Verfahren auf eine Mikroskopie, vorzugsweise Durchlichtmikroskopie, als Anwendungstechnologie und/oder Trainingstechnologie beschränkt ist. In anderen Worten können sich die Anwendungstechnologie und/oder Trainingstechnologie nur auf Mikroskopie-Technologien beziehen und z. B. somit nicht auf eine Durchflusszytometrie.

Herkömmlicherweise ist es dabei aufwendig, aus einer so kontinuierlich bewegten Probe Strukturinformationen und/oder Bilder und/oder daraus abgeleitete Analysen zu gewinnen. Insbesondere wird dabei der Probendurchsatz trotz der stärkeren Parallelisierung durch die Detektionsvorrichtung ggf. unter Einsatz mehrerer Sensoren zur Detektion erheblich verringert. Hier kann erfindungsgemäß der Vorteil erzielt werden, dass durch das angelernte Auswertungsmittel der Aufwand für diese Ermittlung verringert wird, z. B. eine Bewegungsunschärfe und/oder ein Rauschen mittels eines neuronalen Netzes reduziert wird. Ebenfalls können weitere neuronale Netzte des Auswertungsmittels und/oder weitere Auswertungsmittel antrainiert sein und bei der Auswertung genutzt werden, um Strukturinformationen und/oder Bilder und/oder daraus abgeleitete Analysen jeweils als Zusatzinformation zu ermitteln.

Auch kann es möglich sein, dass die Probe oder die Zellen der Probe für die Aufnahme von Bildern (Eingabeaufzeichnungen und/oder Erfassungsinformationen) oder die Probenanalyse (anhand der Eingabeaufzeichnungen und/oder Erfassungsinformationen) relativ zur Detektionsvorrichtung kontinuierlich verschoben und währenddessen analysiert werden, um einen Geschwindigkeitsgewinn zu erhalten. Dies kann neben der Durchflusszytometrie auch bei Anwendung einer Mikroskopie als Anwendungs- und/oder Trainingstechnologie vorgesehen sein. Hierzu wird bspw. eine Blitzlichtbeleuchtung als eine Beleuchtung der Probe eingesetzt, und/oder als wenigstens ein Sensor der Detektionsvorrichtung ein Linearsensor verwendet. In der Mikroskopie kann ein solches Verfahren unter Verwendung von Kamerasensoren aufwendig sein, da die Bewegung der Probe mit der Blitzlichtbeleuchtung und der Kameraaufnahme insbesondere bei hohen Geschwindigkeiten synchronisiert werden muss. Hier kann es erfindungsgemäß ein Vorteil sein, wenn ein Auswertungsmittel angelernt wird, aus Erfassungsinformationen ermittelt durch weniger umfangreiche Beleuchtungssituationen (z. B. ohne Blitzlichtbeleuchtung und/oder weniger Sensoren) die Zusatzinformation zu ermitteln, welche durch Zielaufzeichnungen mit der umfangreicheren Beleuchtungssituation bereitgestellt wird. Damit kann die Probe sowohl kontinuierlich beleuchtet als auch unsynchronisiert kontinuierlich aufgenommen werden, was die Ansprüche an die Technik stark verringern kann und es erlaubt, höhere Kamerageschwindigkeiten zu erreichen.

Zusätzlich hat die kontinuierliche Bewegung den Vorteil, dass ein festes Beleuchtungsmuster, bspw. ein Streifenmuster, eine Auflösungserhöhung in Bewegungsrichtung im Sinne einer strukturierten Beleuchtung erzeugen kann ohne das ein weitere Vorrichtung zur Bewegung des Beleuchtungsmusters notwendig ist.

Ferner ist es denkbar, dass das Anlernen insbesondere automatisiert auf einem Probentyp mit einer bestimmten Farbe und/oder einer bestimmten Aufnahmemethode durchgeführt wird, insbesondere für die Entwicklung probenspezifischer Assays and Analysen. Der Einsatz herkömmlicher dedizierter Algorithmen ist hierbei allerdings unter Umständen problematisch. Methoden des maschinellen Lernens können hingegen in der Lage sein solche Problematiken, wie der Bewegungsunschärfe und/oder Rauschen, bei entsprechend umfangreichem Ground Truth robuster zu lösen als dedizierte Algorithmen. Mit hoher Bildrate aufgenommene Aufnahmen der Probe können als Expertendaten dienen, um das Auswertungsmittel (wie ein neuronales Netz) so zu trainieren, dass es aus einem Video mit einer geringeren Bildrate als Anwendungsdaten die Bewegungsunschärfe und/oder das Rauschen besser herausrechnen kann als herkömmliche Methoden.

Das Verfahren lässt sich ungeachtet der Vorteile aus dem Herausrechnen der Bewegungsunschärfe und/oder eines Rauschens durch Anlernen aber auch auf Basis der Bewegungsgeschwindigkeiten durch klassische Methoden der Bewegungsunschärfekorrektur durchführen ohne auf die Vorteile des automatisierten Anlernens mittels des Ground Truth und erhöhter Geschwindigkeit durch kontinuierliche Aufnahme auf den Auswertungssystemen zu verzichten.

Die hier beschriebene Erfindung kann dazu dienen, ein System und/oder ein Verfahren bereitzustellen, welche für einen bestimmten Probentyp sowohl ein automatisiertes Anlernen (insbesondere automatisiertes Training der Bild- oder Analysefunktion) unter Verwendung einer Trainingstechnologie ggf. auch mittels In Silico Labelling erlaubt, um vorzugsweise damit in einer weiteren Aufnahmeart (Anwendungstechnologie) eine Analyse von Proben mit großer Geschwindigkeit für eine spezifische Fragestellung auf dem Probentyp zu erlauben. Dabei können die letzteren Aufnahmen oder Analysen auch auf technisch einfacheren Anwendungssystemen durchgeführt werden, welche die aufwendigere Trainingstechnologie zum Training nicht unterstützen.

Die sogenannte Methode des "In Silico Labelling" ist in der Veröffentlichung "In Silico Labeling: Predicting Fluorescent Labels in Unlabeled Images", Christiansen, Eric M. et al. Cell, Volume 173, Issue 3, 792 - 803 offenbart. Es handelt sich dabei um durch eine Computerverarbeitung ("in silico") durchgeführte Fluoreszenzmarkierungen. Es ist denkbar, dass die Eingabe- und/oder Zielaufzeichnung bei einem erfindungsgemäßen Verfahren derartig durchgeführte Fluoreszenzmarkierungen aufweist.

Damit kann ggf. auch der Vorteil erzielt werden, dass mikroskopische Bildanalysen mit Methoden, die herkömmlicherweise technisch nur aufwendig umzusetzen sind, auf optische (insbesondere kamerabasierte) Methoden abgebildet werden können, welche technisch einfacher ausgeführt sein können. Dabei kann das Auswertungsmittel (wie ein neuronales Netzt oder ein System neuronaler Netze) insbesondere daraufhin ausgelegt werden, dass es auf durch ein Trainingssystem gewonnen Expertendaten trainiert werden kann, dann aber auf technisch einfacheren Anwendungssystemen angewandt werden kann. Dadurch wird es aufgrund der speziellen Trainingsmethoden auch möglich, dass das Auswertungsmittel auf einem manuellen Mikroskop durch manuelle relative Verschiebung der Probe entsprechende Analysen durchführt, wobei im Gegensatz zu üblichen Verfahren auch die Daten während der kontinuierlichen Verschiebung robust ausgewertet werden können.

Es ist für die Auswertung und/oder das Anlernen auch denkbar, dass externe neuronale Netze zur Lieferung der Expertendaten genutzt werden.

Vorteilhafterweise kann die Probe als eine Zellprobe ausgeführt sein, insbesondere mit adhärenten Zellen auf Gewebeschnitten oder in sogenannten Mikrotiterplatten (Wellplates). Diese können erfindungsgemäß mit sehr hoher Geschwindigkeit und/oder ohne mechanische Probleme, welche durch schrittweise Ausführung bei mechanischen Vibrationen oder durch die Ungenauigkeiten in Bewegungsrichtung und -geschwindigkeit bei manueller Bewegung des Sensors oder der Probe(n) entstehen können, analysiert werden.

Ferner ist es optional vorgesehen, dass die Eingabeerfassung sich von der Zielerfassung zumindest dadurch unterscheidet, dass bei der Eingabeerfassung durch eine insbesondere relative Bewegung (Relativbewegung z. B. relativ zum Erfassungssystem) der Probe die Eingabeaufzeichnung beeinflusst wird, sodass die Anlerninformation für zumindest eine Reduzierung dieser Beeinflussung und zusätzlich für die Ermittlung der Zusatzinformation spezifisch ist. Das Anlernen für die Reduzierung dieser Beeinflussung kann bspw. dadurch erfolgen, dass das Auswertungsmittel ein neuronales Netz oder dergleichen aufweist, welches mit der Eingabeaufzeichnung (welche die Beeinflussung aufweist) als Anwendungsdaten und der Zielaufzeichnung (welche die Beeinflussung nicht aufweist) als Expertendaten bzw. Ground Truth trainiert wird. Auf diese Weise ergibt sich eine Anpassung der Anlerninformation (z. B. als Anpassung des neuronalen Netzes), welche für die Reduzierung dieser Beeinflussung spezifisch ist. Um zusätzlich auch die Ermittlung der Zusatzinformation durch die Anlerninformation zu ermöglichen, kann ggf. ein weiteres neuronales Netz oder dergleichen des Auswertungsmittels trainiert werden. Hierzu kann z. B. das weitere neuronale Netz oder dergleichen mit wenigstens einer weiteren Eingabeaufzeichnung (ohne der Zusatzinformation) als Anwendungsdaten und wenigstens einer weiteren Zielaufzeichnung (mit der Zusatzinformation) als Expertendaten bzw. Ground Truth trainiert werden. Sämtliche so trainierte Netze können bei der Auswertung miteinander verknüpft werden, um so kaskadisch die Auswertung durchzuführen. Die Anpassung dieser neuronalen Netze kann in der Auswerteinformation als ein oder mehrere Datensätze vorgesehen sein, um diese in einfacher Weise darüber bereitstellen zu können.

Bevorzugt kann im Rahmen der Erfindung vorgesehen sein, dass bei der Eingabeerfassung und/oder bei der Zielerfassung eine (ggf. vollständig oder teilweise) automatisierte schrittweise oder kontinuierliche Probenrelativverschiebung, insbesondere relative Bewegung der Probe durchgeführt wird, für welche die Anlerninformation spezifisch angelernt wird. Durch das Einbringen der relativen Bewegung in die Anwendungsdaten kann somit in zuverlässiger Weise das Anlernen durchgeführt werden, um die Bewegung bei der Auswertung zu berücksichtigen. Die Anlerninformation ist daher spezifisch, da sie die Bewegung bei der anwendungssystemseitigen Auswertung berücksichtigt.

In einer weiteren Möglichkeit kann vorgesehen sein, dass bei der Eingabeerfassung und bei der Zielerfassung motorisiert eine (ggf. vollständig) automatisierte schrittweise oder kontinuierliche, insbesondere relative, Bewegung der Probe durchgeführt wird, um insbesondere für eine Vielzahl von Objekten der Probe und/oder für eine Vielzahl von Proben jeweils wenigstens eine Eingabe- und Zielaufzeichnung als Trainingsdaten zum Anlernen zu ermitteln, wobei vorzugsweise anhand der Zielaufzeichnung automatisiert ein Ground Truth bzw. Expertendaten für das Anlernen bestimmt wird bzw. werden, insbesondere durch eine Referenzverarbeitung, vorzugsweise durch eine automatische Segmentierung. Die Referenzverarbeitung kann z. B. durch die Anwendung eines Schwellenwertverfahrens (engl. thresholding) bei der Zielaufzeichnung erfolgen, um zuverlässig und/oder in automatisierter Weise z. B. eine Maskierung (Segmentierung) von Zellen durchzuführen.

Ferner ist es optional vorgesehen, dass die Zielaufzeichnung und/oder die Eingabeaufzeichnung jeweils Aufzeichnungen der Probe an den unterschiedlichen Probenpositionen aufweisen, wobei vorzugsweise bei der Eingabeerfassung und/oder bei der Zielerfassung während einer motorisiert durchgeführten automatisierten kontinuierlichen oder schrittweisen, insbesondere relativen, Verschiebung der Probe Positionsdaten über die Probenpositionen ermittelt werden, um anhand der Positionsdaten die Aufzeichnungen den Probenpositionen zuzuordnen. Auf diese Weise ist die Umsetzung eines besonders schnellen und insbesondere kontinuierlichen Modus zur Erfassung der Probe möglich.

Wenn die Eingabe- und/oder Zielerfassung und/oder die anwendungssystemseitige Erfassung im kontinuierlichen Modus erfolgt, ist es denkbar, dass ein oder mehrere Eingabeaufzeichnungen und/oder Zielaufzeichnungen und/oder Erfassungsinformationen zumindest teilweise parallel und/oder gleichzeitig und/oder sequentiell bei der wenigstens einen Probe während einer, insbesondere relativen, Bewegung der wenigstens einen Probe erfasst werden. Hierzu können z. B. unterschiedliche Kanäle des optischen Erfassungssystems genutzt werden. Es kann sich dabei auch für die verschiedenen Eingabe- und/oder Zielaufzeichnungen und/oder Erfassungsinformationen um Aufzeichnungen gemäß unterschiedlicher Technik bzw. Anwendungs- und/oder Trainingstechnologie handeln. Bspw. lassen sich so zumindest teilweise gleichzeitig Transmissions- und Fluoreszenzaufnahmen ermitteln. Ferner können die Erfassungen für die jeweilige Eingabe- und/oder Zielaufzeichnungen und/oder Erfassungsinformationen wiederholt durchgeführt werden. Um diese wiederholten Erfassungen wieder für eine entsprechende Aufzeichnung und/oder Erfassungsinformation zu kombinieren, werden während der (relativen) Bewegung bspw. gleichzeitig die aktuellen Positionsdaten der wenigstens einen Probe erfasst. Damit lassen sich z. B. mit hoher Geschwindigkeit viele Trainingsdaten zum Anlernen ermitteln.

Es kann ferner möglich sein, dass die Eingabeerfassung und die Zielerfassung jeweils als trainingssystemseitige Erfassung durch ein optisches Trainingssystem durchgeführt werden, wobei vorzugsweise die Anlerninformation für die Ermittlung der Zusatzinformation anhand einer anwendungssystemseitigen Erfassungsinformation spezifisch ist, die durch eine anschließend durchgeführte anwendungssystemseitige Erfassung (anwendungssystemseitige Eingabeerfassung) durch ein optisches Anwendungssystem ermittelt wird. Bei dieser anwendungssystemseitigen Erfassung kann außerdem eine (insbesondere manuelle) kontinuierliche Probenrelativverschiebung durchgeführt werden. Alternativ oder zusätzlich kann das Anwendungssystem zur Bereitstellung der Anwendungstechnologie ausgeführt sein, und das Trainingssystem zusätzlich dazu (neben der Bereitstellung der Anwendungstechnologie) zur Bereitstellung der Trainingstechnologie ausgeführt sein. Dies ermöglicht ein zuverlässiges und schnelles Ermitteln von Trainingsdaten für das Anlernen.

Es kann weiter möglich sein, dass das Auswertungsmittel als ein auf Maschinenlernen und/oder künstlicher Intelligenz und/oder Deep Learning basiertes Computerprogramm ausgeführt ist, und vorzugsweise ein oder mehrere künstliche neuronale Netze insbesondere gemäß einer Trainingshierarchie aufweist, wobei bevorzugt ein erstes der Netze zur Ermittlung der Zusatzinformation angelernt ist und zumindest ein zweites der Netze zur Kompensation der kontinuierlichen Probenrelativverschiebung angelernt ist. Damit lassen sich umfangreiche Probenanalysen im kontinuierlichen Modus realisieren. Die Trainingshierarchie bezieht sich dabei insbesondere auf eine Auswertung durch die Netze in Kaskadenform. Zum Anlernen des Netzes zur Kompensation der kontinuierlichen Probenverschiebung kann es auch möglich sein, dass ein Ground Truth aus gestichten Sehfeldern aus einer schrittweisen oder mittels einer Flashlampe generierten Bilder ohne Bewegungsunschärfe und/oder Rauschen verwendet wird. Im Fall einer z-Bewegung oder einer Bewegung in mehreren Raumrichtungen müsste dieser Ground Truth ggf. durch entsprechende Aufnahmen aus den z-Ebenen erweitert werden.

Alternativ kann hier auch eine klassische Methode statt des zweiten Netzes zur Kompensation der kontinuierlichen relativen Probenverschiebung innerhalb des Systems eingesetzt werden. Bspw. könnte hier eine Umrechnung mittels der bekannten Bewegunggeschwindigkeiten stattfinden.

Auch ist es möglich, dass neuronale Netze parallel angelernt werden. Hierzu wird bspw. ein erstes der Netze parallel zu einem zweiten der Netze angelernt. Alternativ oder zusätzlich kann ein neuronales Netz insbesondere gemäß einem "Multitask-Learning" derart angelernt werden, dass es aus den (anwendungssystemseitigen) Erfassungsinformationen mehrere Ergebnisinformationen bereitstellt (z. B. wenigstens eine Zusatzinformation und/oder eine weitere Information, wie eine Information über eine Kompensation einer kontinuierlichen Probenrelativverschiebung).

In einer weiteren Möglichkeit kann vorgesehen sein, dass beim Anlernen hierarchisch mehrere neuronale Netze des Auswertungsmittels für jeweilige Verarbeitungen der Eingabeaufzeichnung angelernt werden, und insbesondere das Auswertungsmittel durch die Anlerninformation zur Durchführung von wenigstens zwei Probenanalysen angelernt ist, welchen jeweils eines der dafür spezifischen neuronalen Netze des Auswertungsmittels zugeordnet ist. In anderen Worten können die Netze zur Durchführung der entsprechenden Probenanalysen angelernt werden. Solche Probenanalysen sind bspw. eine Segmentierung und/oder ein Substanznachweis bei der Probe oder dergleichen.

Es ist ferner denkbar, dass die Trainingstechnologie und/oder die Anwendungstechnologie jeweils als Mikroskopietechnologien insbesondere zur Durchlichtmikroskopie ausgeführt sind, vorzugsweise dass das Trainingssystem und/oder ein Anwendungssystem jeweils als Mikroskope vorzugsweise zur Durchflusszytometrie ausgeführt sind.

Vorteilhaft ist es darüber hinaus, wenn im Rahmen der Erfindung zur Eingabe- und/oder Zielerfassung (jeweils oder gemeinsam) wenigstens eine Detektionsvorrichtung und wenigstens ein Beleuchtungsmittel (wie mindestens eine Lichtquelle) eines Trainingssystems verwendet wird, wobei
- bei der Eingabeerfassung die Probe in einem ersten Aufnahmemodus und/oder mit einer ersten Beleuchtungsintensität relativ zu dem Trainingssystem, insbesondere einer Erfassungsoptik (oder auch Abbildungsoptik), über mehr als ein gesamtes Detektionsfeld der Detektionsvorrichtung kontinuierlich oder schrittweise verschoben wird, um die Eingabeaufzeichnung eines Bereichs der Probe zu erhalten,
- bei der Zielerfassung zumindest teilweise der gleiche Bereich der Probe in einem zweiten Aufnahmemodus und/oder mit einer zweiten Beleuchtungsintensität erfasst wird, um die Zielaufzeichnung zu erhalten, wobei sich vorzugsweise der zweite Aufnahmemodus und/oder die zweite Beleuchtungsintensität von dem ersten Aufnahmemodus bzw. der ersten Beleuchtungsintensität unterscheidet.
- bei dem Anlernen aus der Zielaufzeichnung ein Ground Truth bestimmt wird und aus der Eingabeaufzeichnung Anwendungsdaten (Targetdaten) bestimmt werden, welche zum Anlernen wenigstens eines ersten neuronalen Netzes (des Auswertungsmittels) verwendet werden, um die Anlerninformation zu bestimmen,
- optional: Anlernen (Trainieren) wenigstens eines weiteren neuronalen Netzes (des Auswertungsmittels) mittels des ersten neuronalen Netzes, um die Anlerninformation zu bestimmen, welche für ein neuronales Netzsystem sämtlicher trainierter neuronaler Netze (des Auswertungsmittels) spezifisch ist,
- Anwenden des Auswertungsmittels mit der Anlerninformation bei einem Anwendungssystem zur anwendungssystemseitigen Erfassung in dem ersten Aufnahmemodus und/oder mit der ersten Beleuchtungsintensität, wobei die Erfassung insbesondere dazu dient eine anwendungssystemseitige Erfassungsinformation zu erhalten, wobei hierzu vorzugsweise wenigstens eine Probe kontinuierlich über mehr als ein gesamtes Detektionsfeld einer weiteren Detektionsvorrichtung des Anwendungssystems verschoben wird.

Der Aufnahmemodus kann bspw. einen kontinuierlichen oder schrittweisen oder manuellen Modus der Probenrelativverschiebung betreffen. Auch kann der Aufnahmemodus und/oder die Beleuchtungsintensität gemäß einer Trainings- bzw. Anwendungstechnologie ausgeführt sein.

Beispielsweise kann es vorgesehen sein, dass die Verfahrensschritte eines erfindungsgemäßen Verfahrens auch zur Eingabe- und Zielerfassung, und insbesondere auch bei der anwendungssystemseitigen Erfassung, verschiedener Proben und/oder Objekte der Probe vollständig automatisiert durchgeführt werden, sodass hierbei auf jeglichen manuellen Eingriff verzichtet werden kann. Dies ermöglicht eine besonders schnelle Erfassung der Probe.

Auch kann bei der kontinuierlichen Aufnahme ein Nachführsystem zur kontinuierlichen motorisierten Nachführung der Position der Probe, insbesondere relativen optischen z-Position zwischen der Probe und der Detektionsvorrichtung (insbesondere Detektionssensor) eingesetzt werden. Eine vorteilhafte Ausführung ist z. B. eine dafür angelernte Methode, welche aus dem Training von z-Stacks (mehreren Probenaufzeichnungen in z-Richtung, also für verschiedene Tiefen der Probe) und dem Ground Truth der entsprechenden fokussierten Positionen innerhalb der z-Stacks einen motorisierten z-Trieb des Objektivs so nachführt, dass während einer kontinuierlichen Verschiebung die Probe stets in einem möglichst gleichbleibenden optischen Abstand zum Detektionssystem gehalten wird.

In einer weiteren Möglichkeit kann vorgesehen sein, dass bei der Eingabe- und Zielerfassung, und insbesondere auch bei der anwendungssystemseitigen Erfassung, verschiedene Tiefen der Probe erfasst werden, sodass die Eingabeaufzeichnung und/oder Zielaufzeichnung einen Stapel (z-Stapel) von Aufnahmen der Probe (für verschiedene Probenpositionen in axialer z-Richtung) aufweist. Genauso wie eine laterale Probenrelativverschiebung (in x- und/oder y-Richtung) kann auch orthogonal hierzu in der z-Richtung eine kontinuierliche Probenrelativverschiebung vorgesehen sein.

Eine besonders vorteilhafte Ausführung einer anwendungssystemseitigen Erfassungsinformation ist eine optische Auslegung auf der Aufnahmeseite bei dem Erfassungssystem, welche eine gleichzeitige Abbildung verschiedener z-Ebenen (d. h. Tiefenebenen der Probe) auf einem Sensor (der Detektionsvorrichtung) erlaubt. Dies könnte bspw. durch einen zum optischen Lot gekippten Sensor erfolgen. Durch die kontinuierliche Bewegung kann die Probe dann sowohl in verschiedenen z-Ebenen erfasst als auch an verschieden Stellen der Optik mit unterschiedlichen optischen Eigenschaften durchgeführt werden, wobei vorzugsweise die hierdurch erfassten verschiedenen Probenabschnitte durch die Verschiebung in den z-Ebenen gleiche optische Erfassungsbedingungen erfahren. Ein weiterer Vorteil dieser Ausführung sind die reduzierten Ansprüche an eine Focusnachführung des Systems in z-Richtung. Der Sensor kann z. B. als ein monochromer Kamerasensor, ein polarisationsauflösender Kamerasensor oder als ein RGB Kamerasensor ausgebildet sein, wobei in den letzteren Fällen jeweils eine polarisationskodierte bzw. farbkodierte Beleuchtung zusätzliche Informationen über die Probe liefern kann.

Ferner ist es im Rahmen der Erfindung möglich, dass bei der Eingabe- und/oder Zielerfassung und/oder bei der anwendungssystemseitigen Erfassung (des Anwendungssystems) verschiedene Tiefen der Probe erfasst werden, sodass vorzugsweise die Eingabeaufzeichnung und/oder die Zielaufzeichnung und/oder eine (anwendungssystemseitige) Erfassungsinformation der anwendungssystemseitigen Erfassung einen Stapel mit Aufnahmen der Probe für axiale Probenpositionen aufweist.

Alternativ oder zusätzlich ist es möglich, dass (die) verschiedene(n) Tiefen der Probe dadurch erfasst werden, dass, insbesondere durch das Anwendungssystem (und/oder das Trainingssystem), Probenbereiche der verschiedenen Tiefen (Tiefenbereiche) auf verschiedene Bereiche eines Sensors einer Detektionsvorrichtung des Anwendungs- und/oder Trainingssystems abgebildet werden. Damit können gleichzeitig verschiedene Positionen der Probe in z-Richtung (Tiefenrichtung der Probe) auf dem Sensor abgebildet werden. Um weitere Positionen der Probe zu erfassen, kann zudem die Probenrelativverschiebung insbesondere als kontinuierliche Verschiebung erfolgen, während weitere Erfassungen durchgeführt werden. Um die gleichzeitige Abbildung der verschiedenen Tiefenbereiche zu ermöglichen, kann bevorzugt der Sensor hinsichtlich einer optischen Achse bei dem Anwendungssystem (bzw. Trainingssystem), insbesondere zu einem Lot der optischen Achse, geneigt angeordnet sein. Auch kann die Abbildung dadurch ermöglicht werden, dass eine Abbildungsoptik des Anwendungssystems (bzw. Trainingssystems) entsprechend angepasst wird. Insbesondere ist der Sensor als Flächensensor und/oder Kamerasensor ausgebildet.

Auch ist es denkbar, dass die Eingabeerfassung und/oder Zielerfassung und/oder weitere Zielerfassungen und/oder weitere Eingabeerfassungen für das Anlernen durch unterschiedliche Kanäle des Trainingssystems gleichzeitig oder zeitlich versetzt für unterschiedliche Probenpositionen durchgeführt werden.

Außerdem kann es möglich sein, dass das Auswertungsmittel durch die Anlerninformation dazu angepasst ist, zumindest eine der nachfolgenden Proben zu analysieren:
- adhärente Zellen auf Gewebeschnitten,
- Proben auf einer Mikrotiterplatte,
- gefärbte Zellen,
- ungefärbte Zellen.

Ein weiterer Vorteil im Rahmen der Erfindung ist erzielbar, wenn die Zusatzinformation (bzw. Ergebnisinformation), und/oder ein Ground Truth zum Anlernen eines Auswertungsmittels, eine der nachfolgenden Informationen über die Probe ist:
- eine Detektion, insbesondere Segmentierung oder Lokalisierung von Objekten und/oder Zellen der Probe, insbesondere eine Segmentierungsmaske,
- eine Schätzung der Klassifizierung oder Regression von Pixel oder Objekten oder Probenbereichen der Probe,
- ein zytometrisches oder histologisches Analyseergebnis (z. B. für den Ground Truth, gewonnen mit etablierten Methoden der Probenanalyse bspw. High Content Analyse),
- eine Phaseninformation (z. B. für den Ground Truth aus einer komplementären, etablierten Methode zur Phasenmessung),
- eine dreidimensionale Information über die räumliche Struktur der Probe (z. B. ist der Ground Truth eine z-Stapel-Aufnahme),
- wenigstens eine Fluoreszenzeigenschaft der Probe (z. B. ist der Ground Truth wenigstens ein Fluoreszenzbild der Probe),
- ein erweiterter Schärfetiefenbereich einer Probenaufzeichnung (z. B. ist der Ground Truth ein entsprechendes Bild mit erweitertem Schärfetiefenbereich der Probe).

Ebenfalls Gegenstand der Erfindung ist ein System zur Bereitstellung eines Auswertungsmittels für wenigstens ein optisches Anwendungssystem einer mikroskopbasierten Anwendungstechnologie, insbesondere gemäß einem erfindungsgemäßen Verfahren, aufweisend:
- zumindest eine Detektionsvorrichtung zum Durchführen einer Eingabeerfassung wenigstens einer Probe gemäß der Anwendungstechnologie, um anhand der Eingabeerfassung wenigstens eine insbesondere digitale Eingabeaufzeichnung der Probe zu erhalten,
- die oder wenigstens eine weitere Detektionsvorrichtung zum Durchführen einer Zielerfassung der Probe gemäß einer Trainingstechnologie, um anhand der Zielerfassung wenigstens eine, insbesondere digitale, Zielaufzeichnung der Probe zu erhalten, wobei vorzugsweise die Trainingstechnologie sich von der Anwendungstechnologie zumindest dadurch unterscheidet, dass die Trainingstechnologie zur Bereitstellung einer Zusatzinformation über die Probe ausgeführt ist,
- eine Auswertevorrichtung zum Anlernen des Auswertungsmittels zumindest anhand der Eingabeaufzeichnung und der Zielaufzeichnung, um eine Anlerninformation des Auswertungsmittels zu erhalten,
- eine Probenbewegungsvorrichtung, wie ein motorisierter Probentisch, zur (lateralen und/oder axialen) relativen oder direkten Verschiebung der Probe, um bei der Eingabeerfassung und/oder bei der Zielerfassung verschiedene Probenpositionen automatisiert zu erfassen, sodass insbesondere die Anlerninformation für eine kontinuierliche Probenrelativverschiebung (insbesondere bei dem Anwendungssystem) zur Ermittlung der Zusatzinformation angelernt wird.

Damit bringt das erfindungsgemäße System die gleichen Vorteile mit sich, wie sie ausführlich mit Bezug auf ein erfindungsgemäßen Verfahren beschrieben worden sind.

Es ist möglich, dass sich die Trainingstechnologie von der Anwendungstechnologie hinsichtlich der eingesetzten Detektionsvorrichtung und/oder Detektionstechnologie und/oder Beleuchtungsvorrichtung und/oder Beleuchtungstechnologie unterscheidet.

Ebenfalls Gegenstand der Erfindung ist ein Computerprogramm, vorzugsweise Computerprogrammprodukt, umfassend Befehle, die bei der Ausführung des Computerprogramms durch einen Computer (wie eine Auswertevorrichtung) diesen veranlassen, anhand wenigstens einer Eingabeaufzeichnung der Probe und anhand einer Anlerninformation eine Zusatzinformation über eine Probe zu ermitteln. Hierbei ist insbesondere vorgesehen, dass die Eingabeaufzeichnung spezifisch ist für eine Eingabeerfassung der Probe gemäß einer Anwendungstechnologie und/oder die Anlerninformation nach einem erfindungsgemäßen Verfahren ermittelt ist. Damit bringt das erfindungsgemäße Computerprogramm die gleichen Vorteile mit sich, wie sie ausführlich mit Bezug auf ein erfindungsgemäßen Verfahren beschrieben worden sind. Zudem kann das Computerprogramm geeignet sein, in einem Datenspeicher einer Auswertevorrichtung, vorzugsweise eines erfindungsgemäßen Systems, nicht-flüchtig gespeichert zu sein. Das Computerprogramm kann z. B. durch ein erfindungsgemäßes Verfahren hergestellt sein.

Auch unter Schutz gestellt ist ein Computerprogramm, vorzugsweise Computerprogrammprodukt, insbesondere Auswertungsmittel, hergestellt durch ein erfindungsgemäßes Verfahren, sodass das Computerprogramm die Anlerninformation aufweist.

Auch ist ein Computerprogramm, vorzugsweise Computerprogrammprodukt, unter Schutz gestellt, welches Befehle aufweist, die bei der Ausführung des Computerprogramms durch einen Computer (wie eine Auswertevorrichtung) diesen veranlassen, die Schritte eines erfindungsgemäßen Verfahrens auszuführen. Zudem kann das Computerprogramm dazu geeignet sein, in einem Datenspeicher einer Auswertevorrichtung, vorzugsweise eines erfindungsgemäßen Systems, nicht-flüchtig gespeichert zu sein.

Jedes der Computerprogramme kann z. B. durch einen Prozessor einer Auswertevorrichtung aus dem Datenspeicher ausgelesen werden, und anschließend durch den Prozessor ausgeführt werden. Bspw. kann jedes der Computerprogramme geeignet sein, eine Steuerung einer Probenbewegungsvorrichtung zur Probenrelativverschiebung vorzunehmen, und insbesondere dabei die Positionsdaten der Probe zu erfassen und/oder zu speichern. Jedes der Computerprogramme und/oder ein computerlesbares Medium mit dem Computerprogramm kann dabei nicht-flüchtig (engl. non-transitory) ausgestaltet sein.

Ebenfalls Gegenstand der Erfindung ist ein computerlesbares Medium. Hierbei ist vorgesehen, dass auf dem computerlesbaren Medium eines der erfindungsgemäßen Computerprogramme gespeichert ist. Damit bringt das erfindungsgemäße computerlesbare Medium die gleichen Vorteile mit sich, wie sie ausführlich mit Bezug auf ein erfindungsgemäßes Computerprogramm beschrieben worden sind. Das computerlesbare Medium kann dabei z. B. als Festplatte und/oder nicht-flüchtiger Datenspeicher und/oder Flashspeicher und/oder Firmware und/oder herunterladbares Programm oder dergleichen ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung zur Visualisierung eines erfindungsgemäßen Verfahrens,
- Fig. 2: eine weitere schematische Darstellung zur Visualisierung eines erfindungsgemäßen Verfahrens,
- Fig. 3: eine weitere schematische Darstellung zur Visualisierung eines erfindungsgemäßen Verfahrens,
- Fig. 4: eine schematische Darstellung eines erfindungsgemäßen Systems,
- Fig. 5: eine optionale Ausführung von Teilen eines Auswertungsmittels.

In den nachfolgenden Figuren werden für die gleichen technischen Merkmale auch von unterschiedlichen Ausführungsbeispielen die identischen Bezugszeichen verwendet.

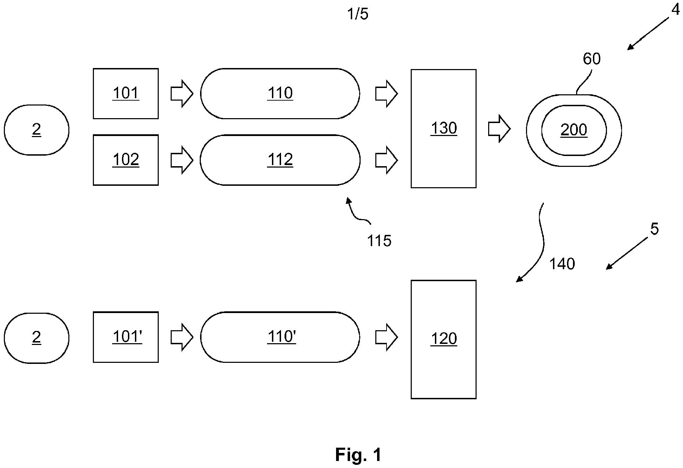

Figur 1 visualisiert ein erfindungsgemäßes Verfahren zur Bereitstellung eines Auswertungsmittels 60 für wenigstens ein optisches Anwendungssystem 5 einer mikroskopbasierten Anwendungstechnologie. Bei der Anwendungstechnologie handelt es sich z. B. um eine Mikroskopietechnik, wie eine Durchlichtmikroskopie, Auflichtmikroskopie, Durchflusszytometrie oder dergleichen.

Um die Bereitstellung des Auswertungsmittels 60 durchzuführen, kann dieses zunächst durch ein optisches Trainingssystem 4 antrainiert werden. Hierzu wird gemäß einem ersten Verfahrensschritt ein Durchführen einer Eingabeerfassung 101 wenigstens einer Probe 2 gemäß der Anwendungstechnologie durchgeführt, um anhand der Eingabeerfassung 101 wenigstens eine Eingabeaufzeichnung 110 der Probe 2 zu erhalten. Die beim Trainingssystem 4 eingesetzte Mikroskopietechnik entspricht somit im Wesentlichen der Anwendungstechnologie des Anwendungssystems 5 oder ist dieser zumindest ähnlich, d. h. die Probenerfassung für beide Systeme 4, 5 hat für die Probenauswertung relevante gemeinsame Eigenarten oder Eigenschaften. Ferner können stets auch mehrere Proben 2 erfasst werden oder mehrere Objekte einer einzigen Probe 2 erfasst werden.

Anschließend erfolgt gemäß einem zweiten Verfahrensschritt ein Durchführen einer Zielerfassung 102 der Probe 2 gemäß einer Trainingstechnologie, um anhand der Zielerfassung 102 wenigstens eine Zielaufzeichnung 112 der Probe 2 zu erhalten. Die Trainingstechnologie kann sich von der Anwendungstechnologie zumindest dadurch unterscheiden, dass eine Zusatzinformation 115 über die Probe 2 bereitgestellt wird.

Die Eingabeaufzeichnung 110 und Zielaufzeichnung 112 können dabei auch als Trainingsdaten (oder auch Anlerndaten) aufgefasst werden. Auch können die Eingabeaufzeichnung 110 und Zielaufzeichnung 112 jeweils wenigstens eine Bildinformation über die Probe 2 aufweisen, ggf. auch über mehrere Proben 2 und/oder unterschiedliche und ggf. überlappende Bereiche der Proben 2.

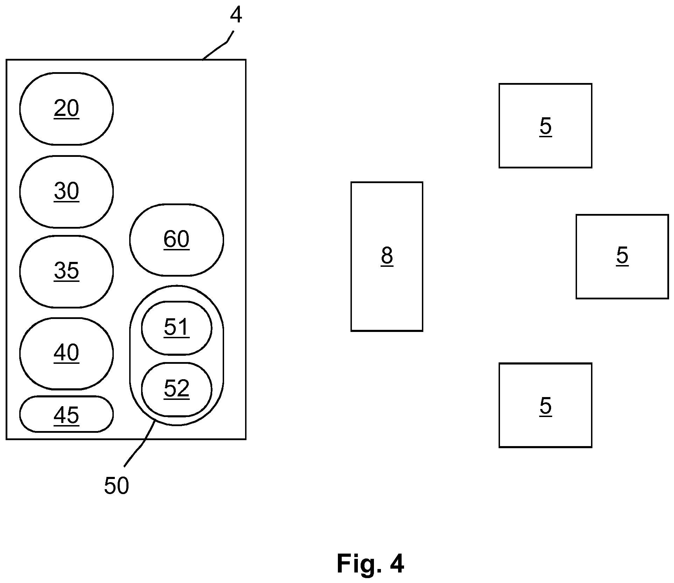

Als dritter Verfahrensschritt ist ein Anlernen 130 des Auswertungsmittels 60 vorgesehen, welches zumindest anhand der Eingabeaufzeichnung 110 und der Zielaufzeichnung 112 erfolgt, um eine Anlerninformation 200 des Auswertungsmittels 60 zu erhalten. Das auf diese Weise angelernte Auswertungsmittel 60 kann dazu angepasst sein, aus Eingabedaten anhand der angelernten Anlerninformation 200 Ausgabedaten zu bestimmen. Die Eingabedaten sind bspw. entsprechend (zumindest annähernd) der Eingabeaufzeichnung 110 ausgeführt und/oder die Ausgabedaten sind entsprechend (zumindest annähernd) der Zusatzinformation 115 ausgeführt, und werden im Gegensatz zu diesen beim Anwendungssystem 5 erfasst. Das Anwendungssystem 5 kann dabei auch räumlich getrennt und/oder autark vom Trainingssystem 4 genutzt werden. Somit ist ggf. als Zwischenschritt ein Verteilen 140 notwendig, z. B. über ein in Figur 4 gezeigtes Cloudsystem 8. Das Verteilen 140 umfasst dabei vorzugsweise einen Datenaustausch und/oder eine nichtflüchtige Speicherung der Anlerninformation 200 in einer Datenbank des Cloudsystems 8.

Dabei kann es erfindungsgemäß vorteilhaft sein, dass bei der Eingabeerfassung 101 und/oder bei der Zielerfassung 102 verschiedene Probenpositionen ggf. auch einer Vielzahl von Proben 2 automatisiert erfasst werden. Dies ermöglicht es, eine besonders schnelle und automatisierte Erfassung der Trainingsdaten für das Anlernen bereitzustellen, sodass das Anlernen besonders zuverlässig und ohne aufwendige manuelle Eingriffe anhand einer großen Datenmenge erfolgen kann.

Ein weiterer Vorteil kann sich dadurch ergeben, dass durch die Erfassung der verschiedenen Probenpositionen die Anlerninformation 200 für eine kontinuierliche Probenrelativverschiebung von mindestens einer Probe 2 zur Ermittlung der Zusatzinformation 115 angelernt wird. Dies ermöglicht es, dass bei der späteren Anwendung des angelernten Auswertungsmittels 60 eine kontinuierliche Probenrelativverschiebung bei einer anwendungssystemseitigen Erfassung 101' genutzt werden kann, um anhand der anwendungssystemseitigen Erfassung 101' eine anwendungssystemseitige Erfassungsinformation 110' zu ermitteln. Die anwendungssystemseitige Erfassung 101' entspricht methodisch vollständig oder annähernd der Eingabeerfassung 101 zumindest insoweit, dass hierbei ebenfalls eine Anwendungstechnologie zum Einsatz kommt. Ggf. kann sowohl bei der Eingabeerfassung 101 als auch bei der anwendungssystemseitigen Erfassung 101' - oder auch nur bei der anwendungssystemseitigen Erfassung 101' - die kontinuierliche Probenrelativverschiebung genutzt werden. Jedenfalls ist gemäß dieser vorteilhaften Weiterentwicklung der Erfindung das Auswertungsmittel 60 dazu angepasst, als Eingabedaten die anwendungssystemseitige Erfassungsinformation 110' nutzen zu können, um anhand dieser Eingabedaten und anhand der Anlerninformation 200 durch eine Auswertung 120 als Ausgabedaten die Zusatzinformation 115 zumindest annähernd zu ermitteln. Die Anlerninformation 200 kann dazu angelernt sein, die Besonderheiten der kontinuierlichen Probenrelativverschiebung zu berücksichtigen. Auf diese Weise kann eine besonders schnelle und effektive Probenaufzeichnung anwendungssystemseitig erfolgen.

Es kann möglich sein, dass die Besonderheiten der kontinuierlichen Probenrelativverschiebung beim Anlernen 130 berücksichtigt werden (und damit z. B. neben der Auswertung 120 zur Bereitstellung der Zusatzinformation 115 auch die Auswertung 120 dieser Besonderheiten angelernt wird). Hierzu kann sich die Eingabeerfassung 101 von der Zielerfassung 102 zumindest dadurch unterscheiden, dass bei der Eingabeerfassung 101 durch eine kontinuierliche oder schrittweise insbesondere relative Bewegung der Probe 2 die Eingabeaufzeichnung 110 beeinflusst wird. Hierdurch kann die Anlerninformation 200 für zumindest eine Reduzierung dieser Beeinflussung und zusätzlich für die Ermittlung der Zusatzinformation 115 spezifisch (angelernt) sein. Dies kann bspw. eine Reduzierung einer Bewegungsunschärfe und/oder eines Rauschens betreffen. In anderen Worten kann bei der Eingabeerfassung 101 und/oder bei der Zielerfassung 102 eine vollständig automatisierte schrittweise oder kontinuierliche (relative) Bewegung der Probe 2 durchgeführt werden, für welche die Anlerninformation 200 spezifisch angelernt wird.

Eine besonders schnelle Probenerfassung kann sich ergeben, wenn bei der Eingabeerfassung 101 und/oder bei der Zielerfassung 102 motorisiert eine vollständig automatisierte schrittweise oder kontinuierliche insbesondere relative Bewegung der Probe 2 durchgeführt wird, um für eine Vielzahl von Objekten der Probe 2 und/oder für eine Vielzahl von Proben 2 jeweils wenigstens eine Eingabe- und Zielaufzeichnung 110, 112 als Trainingsdaten zum Anlernen 130 zu ermitteln. Anhand der Zielaufzeichnung 112 kann sodann automatisiert ein Ground Truth für das Anlernen 130 bestimmt werden, insbesondere durch eine Referenzverarbeitung, vorzugsweise durch eine automatische Segmentierung. Ferner können die Zielaufzeichnung 112 und/oder die Eingabeaufzeichnung 110 jeweils Aufzeichnungen der Probe 2 an den unterschiedlichen Probenpositionen aufweisen. Während der motorisiert durchgeführten automatisierten kontinuierlichen oder schrittweisen (relativen) Verschiebung der Probe 2 können bei der Eingabeerfassung 101 und/oder bei der Zielerfassung 102 Positionsdaten über die Probenpositionen ermittelt werden, um anhand der Positionsdaten die Aufzeichnungen den Probenpositionen zuzuordnen. Dies kann bspw. auch ein "Stiching" der dabei aufgenommenen Probenbilder umfassen.

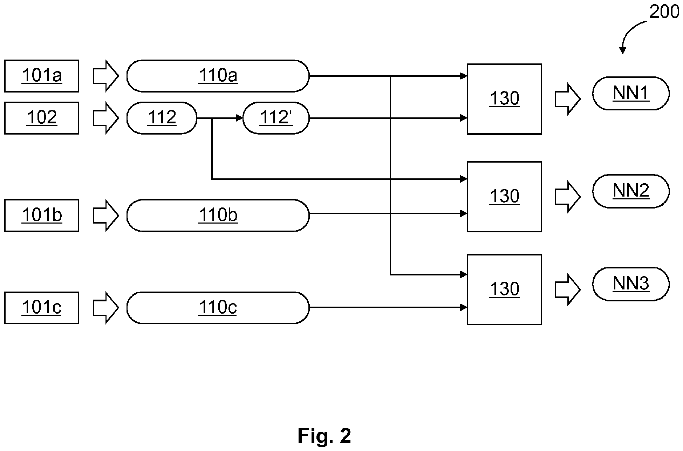

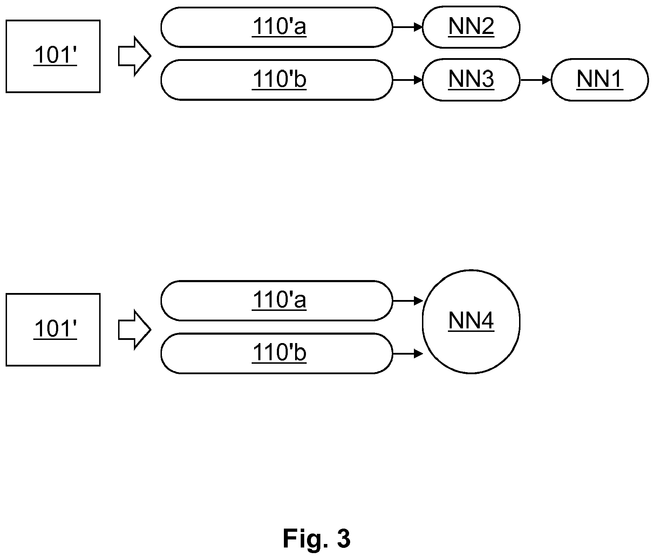

Wie in Figur 2 und 3 näher gezeigt ist, kann das Auswertungsmittel 60 ein oder mehrere künstliche neuronale Netze NN1,NN2,NN3,NN4 gemäß einer Trainingshierarchie aufweisen, wobei bevorzugt zumindest ein erstes NN1 der Netze zur Ermittlung der Zusatzinformation 115 angelernt ist und zumindest ein zweites NN2,NN3 der Netze zur Kompensation der kontinuierlichen Probenrelativverschiebung angelernt ist. So können beim Anlernen 130 hierarchisch mehrere neuronale Netze des Auswertungsmittels 60 für jeweilige Verarbeitungen der Eingabeaufzeichnung 110 angelernt werden. Insbesondere ist das Auswertungsmittel 60 durch die Anlerninformation 200 zur Durchführung von wenigstens zwei Probenanalysen angelernt, welchen jeweils eines der dafür spezifischen neuronalen Netze des Auswertungsmittels 60 zugeordnet ist. Jedes der neuronalen Netze kann anhand einer jeweiligen Anlerninformation 200 definiert sein.

Figur 3 zeigt schematisch einen weiteren beispielhaften Trainingsansatz der Erfindung. Dabei wird das Anlernen (Training) des Auswertungsmittels 60 dadurch durchgeführt, dass Zellen oder Zellkompartimente der Probe 2 mit einer für eine Probenanalyse spezifischen Floureszenzfärbung markiert werden. Diese Färbung kann als Grundlage für eine Zielerfassung 102 dieser Probe 2 gemäß der Trainingstechnologie verwendet werden, um daraus die Zielaufzeichnung 112 zu ermitteln. Auch ist es denkbar, dass eine weitere Verarbeitung, wie eine automatisierte Segmentierung (z. B. durch Threshholding der Floureszenzsignale), der Zielaufzeichnung 112 erfolgt, um die daraus resultierenden Segmentierungsinformationen 112' (wie segmentierte Areale der Probe 2) als Ground Truth zu verwenden. So werden z. B. nur die Masken von bestimmten Zellarealen oder Zellen als Ground Truth verwendet, um damit die Spezifizität des Auswertungsmittels 60 bezüglich der gewünschten Probenanalyse zu erhöhen. Anschließend kann ein Anlernen eines ersten Teils des Auswertungsmittels NN1, insbesondere eines ersten neuronalen Netzes NN1 erfolgen. Insbesondere wird NN1 automatisch dazu trainiert, in einer markerfreien Abbildungsmethode, wie Transmissionsimaging, als Anwendungstechnologie entsprechend korrelierende Areale in den anwendungssystemseitigen Erfassungsinformationen 110' zu finden. Hierzu erfolgt zunächst eine erste Eingabeerfassung 101a mit der Anwendungstechnologie, um eine erste Eingabeaufzeichnung 110a zu erhalten.

In einem weiteren Schritt können optional weitere externe neuronale Netze anderer Art hinzugezogen werden, um die Spezifizität der Zellanalyse bezüglich anderer Probeneigenschaften zu erhöhen.

Vorteilhafterweise kann bei einer ersten Eingabeerfassung 101a und/oder einer zweiten Eingabeerfassung 101b und/oder einer dritten Eingabeerfassung 101c und/oder bei einer Zielerfassung 102 eine automatisierte Bewegung der Probe 2 relativ zum Trainingssystem 4 erfolgen. Bei der zweiten und dritten Eingabeerfassung 101b, 101c kann diese Bewegung zudem kontinuierlich durchgeführt werden, in den anderen Fällen z. B. schrittweise. Ebenfalls sind andere Bewegungsmuster denkbar (wie zufällige Bewegungen oder eine Bewegung der Probe auf einer Scheibe, um durch eine spiralförmige kontinuierliche Bewegung Beschleunigungspeaks zu vermeiden) Bspw. handelt es sich bei einer ersten Eingabeaufzeichnung 110a und bei einer dritten Eingabeaufzeichnung 110c um eine Aufzeichnung gemäß einer ersten Technik einer Anwendungstechnologie, z. B. um Transmissionsbilder. Vorzugsweise ist eine zweite Eingabeaufzeichnung 110b gemäß einer zweiten Technik einer Anwendungs- oder Trainingstechnologie ausgeführt, z. B. einer Fluoreszenzmikroskopie. Die Zielaufzeichnung 112 ist optional ebenfalls eine (ggf. andersartige) Fluoreszenzaufnahme oder weist ggf. zusätzliche Informationen auf. Die Zielaufzeichnung 112 oder eine darauf basierende Weiterverarbeitung 112' kann als Ground Truth zum Training eines ersten Teils des Auswertungsmittels, insbesondere des neuronalen Netzes NN1 genutzt werden. Ferner kann die Zielaufzeichnung 112 als Ground Truth zum Training eines zweiten Teils des Auswertungsmittels (insbesondere neuronalen Netzes) NN2 genutzt werden, insbesondere unter Nutzung der zweiten Eingabeaufzeichnung 110b. Außerdem kann die erste Eingabeaufzeichnung 110a als Ground Truth für das Training eines dritten Teils des Auswertungsmittels (insbesondere neuronalen Netzes) NN3 unter Nutzung der dritten Eingabeaufzeichnung 110c dienen. NN2 und NN3 werden somit zur Berücksichtigung der kontinuierlichen Bewegung antrainiert.

Ein vorzugsweiser weiterer Schritt im Training wird nachfolgend dargestellt, um im manuell bewegten oder motorisiert kontinuierlichen Modus der Probenrelativverschiebung Geschwindigkeiten der Probenerfassung überhalb der kritischen Bildrate zu erlauben. Hierzu kann mittels der Auswertung durch das Auswertungsmittel 60 die Bewegungsunschärfe und/oder Störeinflüsse wie Rauschen herausgerechnet werden. Bspw. wird hierzu die erste Eingabeerfassung 101a zunächst klassisch schrittweise durchgeführt und gegebenenfalls die daraus resultierenden Bilder gestitcht, um hierdurch eine Eingabeaufzeichnung 110a zu erzeugen. Diese kann dazu genutzt werden, das Auswertungsmittel 60 so zu trainieren, dass die kontinuierlich aufgenommenen Daten der zweiten Eingabeaufzeichnung 110b von der Bewegungsunschärfe und/oder den Störeinflüssen befreit werden.

In Figur 3 ist dargestellt, dass auf Grundlage der Auswertung durch dieses Auswertungsmittel 60 zur Reduzierung der Bewegungsunschärfe und/oder Rauschen ein weiteres Auswertungsmittel 60 ggf. so trainiert werden kann, dass es die Zusatzinformation 115 direkt aus einer anwendungssystemseitigen Erfassungsinformation 110' ermittelt.

Diese anwendungssystemseitige Erfassungsinformation 110' kann durch eine anwendungssystemseitige Erfassung 101' im kontinuierlichen Modus durchgeführt werden. Dabei kann die anwendungssystemseitige Erfassungsinformation 110' auch eine erste Erfassungsinformation 110'a und eine zweite Erfassungsinformation 110'b aufweisen, welche gemäß Techniken der Anwendungstechnologie erfasst wurden. Eine erste Technik ist bspw. eine Fluoreszenzmikroskopie (ggf. andersartig als eine technisch komplexere Fluoreszenzmikroskopie der Trainingstechnologie und/oder ohne Segmentierungsinformation oder anderer Informationen über die Probe) und eine zweite Technik eine Transmissionsmikroskopie. Gemäß den trainierten Teilen des Auswertungsmittels NN1, NN2, NN3 kann anschließend die Zusatzinformation 115 zumindest annähert ermittelt werden, insbesondere bei gleichzeitiger Reduzierung der Bewegungsunschärfe. Alternativ kann auch ein weiterer vierter Teil des Auswertungsmittels (insbesondere neuronalen Netzes) NN4 so antrainiert sein, dass es direkt die gewünschte Zusatzinformation 115 zumindest annähernd ermittelt.

Mögliche Kombinationen der Techniken der Anwendungstechnologie und/oder mögliche Kombinationen der Anwendungs- und Trainingstechnologie sind z. B. Transmission und Floureszenz, mehrfarbige z. B. RGB Bilder und Konfokalfloureszenzbilder, Stapel von mehrfarbigen Bildern sowie dreidimensionale Daten aus Multiphotonenbildern, letztere um z. B. auch dreidimensionale Daten anzutrainieren und daraus anwendungssystemseitige Erfassungsinformationen 110' zu erhalten. Ferner können bei Verwendung eines kontinuierlichen Modus auch kontinuierliche (insbesondere relative) Bewegungen in z-Richtung der Probe 2 antrainiert werden, um bei dem anwendungssystemseitigen Ausführen der Eingabeerfassung 101' auf einem unmotorisierten System ein manuelles Durchfahren in z-Richtung durch z. B. die Detektionsvorrichtung 40 und/oder eine Abbildungsoptik 20 des Anwendungssystem 5 anzutrainieren. Ebenso könnten randomisierte kontinuierliche (relative) Bewegungen in z-Richtung und zueinander orthogonalen x-y-Richtungen (lateral zur Probe) antrainiert werden, um später mit der Verwendung im manuellen Modus (also nicht motorisierte manuelle Bewirkung einer (relativen) Bewegung der Probe 2 relativ zum Anwendungssystem 5 oder umgekehrt) eine höhere Spezifizität zu erhalten. Daraus kann z. B. auch ein zusätzlicher Indikator für die Spezifizität im manuellen Modus automatisch entwickelt werden, um für einen Benutzer eine Rückmeldung für die manuelle (relativen) Bewegung zu erzeugen.

In Figur 4 ist schematisch ein beispielhaftes System zur Bereitstellung eines Auswertungsmittels 60 für wenigstens ein optisches Anwendungssystem 5 einer mikroskopbasierten Anwendungstechnologie gezeigt. Das System ist dabei bevorzugt als ein optisches Erfassungssystem, insbesondere Trainingssystem 4, ausgebildet. Das System kann wenigstens eine Detektionsvorrichtung 40 zum Durchführen einer Eingabeerfassung 101 wenigstens einer Probe 2 gemäß der Anwendungstechnologie aufweisen, um anhand der Eingabeerfassung 101 wenigstens eine Eingabeaufzeichnung 110 der Probe 2 zu erhalten. Außerdem kann die oder eine weitere Detektionsvorrichtung 40 dazu ausgeführt sein, eine Zielerfassung 102 der Probe 2 gemäß einer Trainingstechnologie durchzuführen. Diese dient dazu, anhand der Zielerfassung 102 wenigstens eine Zielaufzeichnung 112 der Probe 2 zu erhalten. Die Trainingstechnologie kann sich von der Anwendungstechnologie zumindest dadurch unterscheiden, dass die Trainingstechnologie zur Bereitstellung einer Zusatzinformation 115 über die Probe 2, wie einer Fluoreszenzinformation oder eine Segmentierung oder eine Klassifizierung der Probe 2 ausgeführt ist.

Die wenigstens eine Eingabeaufzeichnung 110 und/oder die wenigstens eine Zielaufzeichnung 112 können auch (sequentiell oder zumindest teilweise gleichzeitig) über mehrere Kanäle 35 des Systems ermittelt werden. Diese nutzen z. B. einen nicht dargestellten Strahlteiler und/oder einen dichroitischen Filter oder dergleichen, um das von einer Probe 2 veränderte Licht an unterschiedliche Sensoren der Detektionsvorrichtung 40 (oder auch an eine weitere Detektionsvorrichtung) weiterzuleiten. Die Weiterleitung erfolgt bspw. in Abhängigkeit von wenigstens einer Eigenschaft des Lichts, wie einer Lichtfarbe und/oder Polarisation und/oder dergleichen. Auf diese Weise kann z. B. ein Transmissionskanal für die Eingabeaufzeichnung 110 und ein Fluoreszenzkanal für die Zielaufzeichnung 112 genutzt werden. Zur Beleuchtung können z. B. ein oder mehrere Lichtquellen 30 als Beleuchtungsmittel 30 eingesetzt werden, um bspw. Laserlicht oder breitbandiges Licht zu erzeugen, und/oder eine Abbildungsoptik 20 entsprechend das erzeugte Licht z. B. hinsichtlich der Lichtfarbe oder der Polarisation für die Weiterleitung beeinflussen.

Ferner kann eine Auswertevorrichtung 50 zum Anlernen 130 des Auswertungsmittels 60 zumindest anhand der Eingabeaufzeichnung 110 und der Zielaufzeichnung 112 vorgesehen sein, um eine Anlerninformation 200 des Auswertungsmittels 60 zu erhalten.

Darüber hinaus kann eine Probenbewegungsvorrichtung 45 des Systems zur (relativen oder direkten) Verschiebung der Probe 2 genutzt werden, um bei der Eingabeerfassung 101 und/oder bei der Zielerfassung 102 verschiedene Probenpositionen automatisiert zu erfassen, sodass insbesondere die Anlerninformation 200 für eine kontinuierliche Probenrelativverschiebung zur Ermittlung der Zusatzinformation 115 angelernt wird. Das Auswertungsmittel 60 ist bspw. als ein Computerprogramm ausgeführt, welches Befehle aufweist, die bei der Ausführung des Computerprogramms durch eine Auswertevorrichtung 50 wie einen Computer 50 diesen veranlassen, anhand der Eingabeaufzeichnung 110 der Probe 2 und anhand der Anlerninformation 200 die Zusatzinformation über die Probe 2 zu ermitteln. Die Eingabeaufzeichnung 110 kann hierbei spezifisch sein für die Eingabeerfassung 101 der Probe 2 gemäß der Anwendungstechnologie und die Anlerninformation 200 nach einem erfindungsgemäßen Verfahren ermittelt sein. Die Auswertevorrichtung 50 kann zur Ausführung des Auswertungsmittels 60 einen Prozessor 51 aufweisen, welcher mit einem Datenspeicher 52, wie ein computerlesbares Medium (z. B. einer Festplatte und/oder einem nicht-flüchtigen Speicher und/oder einem Flash-Speicher und/oder dergleichen), verbunden ist.

Zur Bereitstellung des angelernten Auswertungsmittels 60 kann anschließend die Anlerninformation 200 an ein Cloudsystem 8 oder einen lokalen Datenspeicher oder dergleichen übertragen werden. Anschließend kann die Anlerninformation 200 an ein oder mehrere Anwendungssysteme 5 verteilt werden, um dort eine anwendungssystemseitige Erfassung 101' mit dem angelernten Auswertungsmittel 60 (d. h. anhand der Anlerninformation 200) durchzuführen.

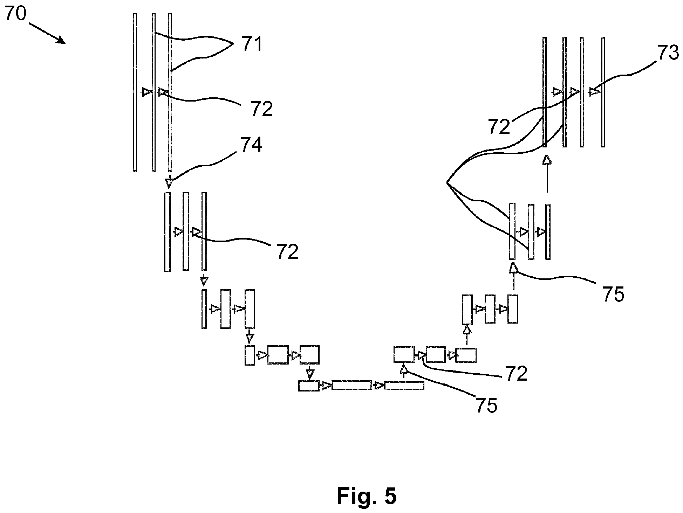

Die nachfolgenden Ausführungen beschreiben anhand Figur 5 rein optional weitere Ausführungsbeispiele und Weiterentwicklungen der Erfindung, und sind somit ohne Einschränkung der erfindungsgemäßen Lehre zu verstehen.

Das Auswertungsmittel 60, d. h. insbesondere das neuronale Netz, kann als ein Convolutional Neural Network (CNN oder deutsch: "faltendes neuronales Netzwerk") ausgebildet sein, vorzugsweise als ein sogenanntes "fully convolutional network", wie es in Long, J.; Shelhamer, E.; Darreil, T. (2014). "Fully convolutional networks for semantic segmentation". arXiv:1411.4038 (Ref. 1) beschrieben wird, und bevorzugt als ein U-Net, wie es in Ronneberger, Olaf; Fischer, Philipp; Brox, Thomas (2015). "U-Net: Convolutional Networks for Biomedical Image Segmentation", MICCAI 2015*:* Medical Image Computing and Computer-Assisted Intervention - MICCAI 2015 pp 234-241, s.a. arXiv: 1505.04597 (Ref. 2) beschrieben wird. Eine mögliche Ausführung einer Netzstruktur und/oder des Trainings und/oder der Anwendung des Netzes bei der Erfindung kann somit der vorgenannten Literatur oder auch der in diesem Zusammenhang durch die Autoren erfolgen Veröffentlichung einer Implementierung im Wesentlichen entsprechen (s. u. a. "https://Imb.informatik.uni-freiburg.de/people/ronneber/u-net/"). In anderen Worten kann gemäß der Erfindung ein bekanntes neuronales Netz zumindest im Wesentlichen unverändert genutzt werden, und damit die Erstellung der Trainingsdatensätze (d. h. der Anlerninformationen bzw. Anwendungsdaten) und/oder das Training (d. h. Anlernen 130) des neuronalen Netzes mit den Trainingsdatensätzen und/oder die auf herkömmliche Art und Weise erfolgen. In Bezug auf die erfindungsgemäße Lösung offenbart die vorliegende Beschreibung daher solche Schritte, welche von den bekannten Trainings- und Anwendungsschritten des maschinellen Lernens abweichen. Eine mögliche Struktur des Netzes gemäß dem U-Net ist in Figur 5 gezeigt.

Nachfolgend sollen weitere optionale Strukturen des Netzes und mögliche Anwendungen genannt werden. So kann z. B. (insbesondere für die Anwendung einer semantischen Segmentierung) das U-Net genutzt werden (s. Sevastopolsky, "Optic Disc and Cup Segmentation Methods for Glaucoma Detection with Modification of U-Net Convolutional Neural Network", https://arxiv.org/abs/1704.00979), für eine Bildklassifizierung z. B. die in Szegedy et al., "Rethinking the Inception Architecture for Computer Vision", https://arxiv.org/abs/1512.00567 beschriebene Netzstruktur (vgl. auch Gulshan et al., "Development and Validation of a Deep Learning Algorithm for Detection of Diabetic Retinopathy in Retinal Fundus Photographs", JAMA. 2016;316(22):2402-2410. doi:10.1001/jama.2016.17216, https://jamanetwork.com/journals/jama/articleabstract/2588763 und Esteva et al, "Dermatologist-level classification of skin cancer with deep neural networks", Nature volume 542, pages 115-118, 02 February 2017, http://www.nature.com/nature/journal/v542/n7639/full/nature21056.html) und für eine Instanzsegmentierung eine Netzstruktur entsprechend Ronneberger, "U-Net: Convolutional Networks for Biomedical Image Segmentation", https://rd.springer.com/chapter/10.1007/978-3-319-24574-4_28; He et al., "Mask R-CNN", https://arxiv.org/abs/1703.06870; Bai et al., "Deep Watershed Transform for Instance Segmentation", https://arxiv.org/abs/1611.08303.

Weitere Möglichkeiten für die Netzstruktur sind zu finden in Redmon et al., "YOLOv3: An Incremental Improvement", https://arxiv.org/abs/1804.02767 (insbesondere zur Detektion) und (insbesondere für eine Bildregression) Ounkomol et al., "Label-free prediction of three-dimensional fluorescence images from transmitted-light microscopy", https://europepmc.org/articles/pmc6212323; Christiansen et al., "In Silico Labeling: Predicting Fluorescent Labels in Unlabeled Images", https://www.ncbi.nlm.nih.gov/pmc/articles/PMC6309178/ sowie Weigert et al., "Contentaware image restoration: pushing the limits of fluorescence microscopy", https://www.nature.com/articles/s41592-018-0216-7. Ferner soll für mögliche Netzstrukturen auf Jing et al., "On the Automatic Generation of Medical Imaging Reports", https://arxiv.org/abs/1711.08195 (für eine Textprädiktion) und Veta et al., "Cutting out the middleman: measuring nuclear area in histopathology slides without segmentation", https://arxiv.org/abs/1606.06127 (für eine Multi-pixel Regression) verwiesen werden.

Nachfolgend wird eine optionale Netzwerkarchitektur für das neuronale Netz mit weiteren Einzelheiten beschrieben. Als besonders geeignet hat sich hierbei ein CNN herausgestellt. Dieses kann geeignet sein, Eingaben in der Form einer Matrix, und somit auch als Matrix dargestellte Bilder, zu verarbeiten. Das jeweilige Bild kann z. B. als eine Bilddatei durch mehrere Pixel definiert sein. Die Anzahl der Pixel in der Breite eines jeweiligen Bildes kann z. B. im Bereich von 8 bis 2048, vorzugsweise 16 bis 1024, bevorzugt 32 bis 512 liegen. Die Anzahl der Pixel in der Höhe kann ebenfalls in den vorgenannten Bereichen liegen, und ferner können ein oder mehrere Farbkanäle vorgesehen sein. Die Anzahl der Neuronen der Eingabeschicht (Input Layer) kann der Anzahl der Pixel des Bildes entsprechen, welche dem Netz als Eingabe übergeben werden. Die gesamte Anzahl der Neuronen des Netzes kann sich zudem aus der Anzahl der Pixel ergeben, welche für weitere Schichten des Netzes jeweils als Eingabe verwendet wird. Konkret kann das Netz ein oder mehrere Convolutional Layer (auch deutsch: "Konvolutionale Schicht" oder einfach "Filter" bezeichnet) aufweisen, welchen ein Pooling Layer (auch Aggregations-Schicht bezeichnet) folgen kann. Die Convolutional Layer und die Pooling Layer können dabei auch abwechselnd wiederholt angeordnet sein. Danach kann sich optional ein Fully Connected Layer anschließen, aber auch darauf verzichtet werden (wie im Falle eines Fully convolutional networks und insbesondere U-Nets). Für jedes Convolutional Layer können jeweils ein oder mehrere Filterkernel (Faltungsmatrix) vorgesehen sein, jeweils mit einer bestimmten Matrixgröße (Pixelgröße), z. B. 2x2 oder 3x3.

Die Aktivität jedes Neurons kann über eine diskrete Faltung berechnet werden, indem bspw. schrittweise der Filterkernel über die Eingabe bewegt werden. Dabei kann das innere Produkt des Filterkernels mit dem aktuell unterliegenden Bildausschnitt berechnet werden. Aus dieser Anwendung der Filterkernel resultiert jeweils eine Ergebnismatrix (oder auch "Merkmalskanal" oder "Feature Map" bezeichnet). Die Größe der Ergebnismatrix kann abhängig sein von der Filtergröße (Kernel-Size), einem ggf. genutzten Padding und von der genutzten Schrittweite. Die genannten Parameter können auch in Abhängigkeit von einem gewünschten Wert der Größe festgelegt werden. Die Anzahl der Ergebnismatrizen (bzw. der Merkmalskanäle) kann sich aus der Anzahl der Filterkernel ergeben bzw. dieser entsprechen. Die Größe der Ergebnismatrix kann für nachfolgende Layer auch mittels der Pooling-Layer verändert werden (sogenanntes Up- bzw. Downsampling). Bei einem MaxPooling Layer wird beispielsweise der höchste Wert der Ergebnismatrix verwendet und alle anderen verworfen. Das MaxPooling ist sehr verbreitet, wobei z. B. aus jedem 2 × 2 Quadrat aus Neuronen des Convolutional Layers nur die Aktivität des aktivsten (daher "Max") Neurons für die weiteren Berechnungsschritte beibehalten wird. Auch kann sich die Anzahl der Filterkernel verändern. Auch können die Ergebnisse jedes Layers durch eine Aktivierungsfunktion wie eine ReLu (Rectified Linear Unit) Funktion aktiviert werden. Die ReLU Funktion kann definiert sein als eine Funktion, bei welcher jeder Wert kleiner als Null zu Null wird und die anderen Werte größer als Null erhalten bleiben.

Gemäß einem weiteren konkreten Beispiel kann als Eingabe eine Eingabeaufzeichnung 110 genutzt werden, welche jeweils als zweidimensionales Bild ausgeführt ist. Bei mehreren Farbkanälen der Eingabeaufzeichnung 110 kann aus der Eingabeaufzeichnung 110 eine 3D-Matrix ermittelt werden. Eine erste Faltung gemäß einem ersten Convolutional Layer kann auf diese Matrix angewendet werden. Die Anzahl der genutzten Neuronen in diesem Schritt kann der Anzahl der Pixel der Matrix entsprechen.

Eine optionale Weiterentwicklung der Netzstruktur 70 kann wie in Figur 5 veranschaulicht und nachfolgend beschrieben aufgebaut sein. Zur besseren Übersicht sind die nachfolgend beschriebenen Elemente nur teilweise mit Bezugszeichen versehen. Die Netzstruktur 70 kann einen zusammenziehenden Pfad (contracting path, s. linke Hälfte der Netzstruktur 70 in Figur 5) und einen expansiven Pfad (expansive path, s. rechte Hälfte der Netzstruktur 70 in Figur 5) aufweisen. Aufgrund der hohen Anzahl der Merkmalskanäle 71 im expansiven Pfad ergibt sich die U-Form der Netzstruktur 70 (vgl. Ref. 2). Der zusammenziehende Pfad kann der typischen Architektur eines CNN entsprechen. Er kann zunächst eine wiederholte Anwendung von zwei 3x3-Faltungen 72 (convolutions), insbesondere ungefüllt (unpadded) und/oder mit 64 Filterkernel und/oder jeweils gefolgt von einer Aktivierungsfunktion wie einer ReLu (Rectified Linear Unit, z. B. f(x) = max (0, x) mit x als Eingangswert des künstlichen Neurons), und anschließend einer 2x2 Max-Pooling-Operation 74 im nachfolgenden Schritt zum Downsampling umfassen. In Figur 5 visualisieren die nach rechts zeigenden Pfeile die Faltungen 72, 73 und die nach unten zeigenden Pfeile das Max-Pooling 74. Jede der Faltungen 72, 73 bis auf die letzte Faltung 73 können dabei als 3x3 Faltungen 72 ausgeführt sein. Der beschriebene Ablauf kann sodann wiederholt werden, wobei mit nachfolgenden Downsampling-Schritten 74 jeweils die Anzahl der Merkmalskanäle 71 verdoppelt wird. Visualisiert ist dabei mit dem Rechteck (teilweise gekennzeichnet mit 71) jeweils nur ein Merkmalskanal 71 repräsentativ für mehrere Merkmalskanäle. So können nach jedem Downsampling 74 die Merkmalskanäle 71 verdoppelt (z. B. zunächst von 64 für die ersten zwei Faltungen, dann 128 für weitere zwei Faltungen, dann 256 für weitere zwei Faltungen, dann 512 für weitere zwei Faltungen und zuletzt 1024). Anschließend kann im expansiven Pfad zunächst ein Upsampling erfolgen (z. B. durch eine initiale 2x2-Faltung 75 ("upconvolution") oder durch eine Interpolation). Die Upsampling-Schritte 75 sind jeweils durch einen Pfeil nach oben gekennzeichnet. Dann können erneut zwei 3x3-Faltungen 72 erfolgen, jeweils gefolgt von der Aktivierungsfunktion bzw. der ReLU. Auch dieser Ablauf kann wiederholt werden, wobei für jedes Upsampling 75 die Anzahl der Merkmals-Kanäle halbiert werden kann. Insgesamt kann das Netzwerk 23 Faltungsschichten (convolutional layers) aufweisen. Aus den letzten zwei Ergebnismatrizen kann sich dann die Segmentierung (oder ein anderes antrainiertes Ergebnis, also die Ergebnisinformation und/oder Zusatzinformation 115) ergeben. Bei anderen Anwendungen ist es denkbar, dass auch mehr als zwei Ergebnismatrizen vorgesehen sind. In Figur 5 ist eine schematische Darstellung der Netzstruktur 70 gezeigt, wobei einige Operationen (z. B. ein Copy-und-Crop) vorgesehen sein können, auch wenn diese nicht explizit dargestellt sind.

Ferner hat sich gemäß der optionalen Ausführungsvariante herausgestellt, dass die konkrete Netzwerkarchitektur sekundär ist, sofern eine relativ hohe Anzahl von Trainingsdatensätzen zum Einsatz kommt. In anderen Worten kann die Netzstruktur austauschbar sein, und braucht nicht weiter angepasst werden, sofern eine hohe Anzahl Datensätze (also Bildern) genutzt wird. Auch auf eine Augmentierung kann in diesem Falle verzichtet werden. Das Training wiederrum kann ebenfalls auf herkömmliche Art und Weise erfolgen. Bspw. wird hierzu eine Backpropagation genutzt. Konkret kann das Training bspw. erfolgen, wie es auch in Ref. 2 beschrieben ist. Als Eingabe (Input) können dabei aufgenommene Bilder und bspw. zugehörige Segmentierungskarten genutzt werden. Es kann dabei ein Optimierungsverfahren wie ein Gradientenverfahren ("Stochastic gradient descent") zum Einsatz kommen. Der Trägheitsterm (momentum) kann hierbei hoch gewählt werden (z. B. 0,99). Die Energiefunktion kann z. B. durch eine pixelweise soft-max-Gewichtung über die Merkmalskarte erfolgen. Als Verlustfunktion kommt eine Kreuzentropie-Funktion in Frage. Durch das Training kann eine Gewichtung für die Filterkernel bestimmt und durch die Anlerninformation 200 repräsentiert werden.

Eine weitere Verlustfunktion, welche optional mit der Erfindung verwendet werden kann, ist in der Literatur Geert Litjens et al. (2017), "A survey on deep learning in medical image analysis", Medical Image Analysis, Volume 42, 2017, Seiten 60-88, ISSN 1361-8415, https.//doi.org/10.1016/j.media.2017.07.005, arXiv:1702.05747 (Ref. 3) beschrieben. Auch kann die in Ref. 3 vorgestellte Trainingsstrategie für die Erfindung zum Einsatz kommen. Als Eingabe für das Netz können z. B. RGB-Bilder verwendet werden, sodass als Eingang die jeweiligen rot, grün und blaue Komponenten des Bildes verwendet werden. Auf die Augmentierungen, insbesondere Rotationsaugmentierung, in Ref. 3 kann ggf. verzichtet werden, sofern die Anzahl der als Eingabe verwendeten verschiedenen Bilder ausreichend ist (z. B. mindestens 100 oder mindestens 500 oder mindestens 1000 beträgt). Prinzipiell kann somit auf jegliche artifizielle Augmentierung verzichtet werden, sofern eine größere Datenmengen Anwendungsdaten als Eingabe erstellt wird. Eine Übersicht weiterer möglicher Netzwerkarchitekturen, welche für andere Eingangstypen des Ground Truth (z. B. zur Klassifizierung, 3D Segmentierung oder ähnliches) anwendbar sind, findet sich in Ref. 2.

Eine optionale Möglichkeit zur Bestimmung des Ground Truth 12 kann die Verwendung von Fluoreszenzbildern (aus Weitfeld oder kofokaler Aufnahmen) oder Phasenbildern aus digitalholographischen Verfahren oder ein Ramanspektrum zur Klassifizierung einer Zelle oder FLIM Bilder- oder Informationen sein, welche jeweils durch die Zielerfassung (Referenzerfassung) ermittelt werden können.

Es kann möglich sein, dass durch die Erfassung der verschiedenen Probenpositionen die Anlerninformation 200 für eine kontinuierliche Probenrelativverschiebung zur Ermittlung der Zusatzinformation 115 angelernt wird, wie nachfolgend noch mit weiteren Einzelheiten beschrieben wird. Sowohl die Eingabeerfassung 101 als auch die Zielerfassung 102 können jeweils als trainingssystemseitige Erfassung 101,102 durch ein optisches Trainingssystem 4 durchgeführt werden, wobei die Anwendungstechnologie und Trainingstechnologie jeweils als eine Mikroskopie oder eine Durchflusszytometrie ausgeführt sind. Das Anlernen 130 zur Ermittlung der Zusatzinformation 115 ist auf diese Weise dazu geeignet, die Anlerninformation 200 so zu bestimmen, dass das Auswertungsmittel 60 bei einer anschließenden anwendungssystemseitigen Auswertung 120 zumindest näherungsweise die Zusatzinformation 115 bestimmt. Hierzu werden bspw. Methoden des maschinellen Lernens, insbesondere Deep Learning, für das Anlernen 130 genutzt.

Optional können für das Anlernen 130 und insbesondere für das Auswertungsmittel 60 zumindest teilweise Architekturen und Algorithmen genutzt werden, welche im Bereich des maschinellen Lernens und insbesondere Deep Learning allgemein verfügbar sind, und sich universell für verschiedene Klassen von Problemen einsetzen lassen. Somit kann es möglich sein, für das Anlernen 130 bekannte Implementierungen von neuronalen Netzen im Wesentlichen unverändert zu nutzen. Eine sehr große Datenmenge kann - anders als die konkrete Netzarchitektur - von größerer Relevanz für das Anlernergebnis sein. Insbesondere im Bereich der Mikroskopie und Durchflusszytometrie können große Datenmengen zum Anlernen 130 leicht verfügbar gemacht werden. Dennoch kann es im Rahmen der Erfindung ggf. nicht auf die Qualität der Funktion der angewandten Anlerninformation 200 ankommen, wenn das Auswertungsmittel 60 mit der Anlerninformation 200 bei einem Anwendungssystem 5 zur anwendungssystemseitigen Erfassung 101' angewendet wird. Vielmehr können die erfindungsgemäß definierten Schritte insbesondere zum Anlernen maßgeblich sein. Diese können nämlich durch die Erfassung verschiedener Probenpositionen ein Anlernen der Anlerninformation 200 für die kontinuierliche Probenrelativverschiebung zur Ermittlung der Zusatzinformation 115 bewirken. In anderen Worten kann erfindungsgemäß eine Lösung vorgeschlagen werden, um ein Anlernen 130 der Anlerninformation 200 und insbesondere eines neuronalen Netzes für eine anwendungssystemseitige kontinuierliche Probenrelativverschiebung anzupassen. Die Anlerninformation 200 kann dabei die Information sein, welche aus dem Anlernen 130 resultiert (z. B. eine Gewichtung und/oder ein Klassifikator für das Netz).

Herkömmlicherweise kann es technisch schwierig und daher unüblich sein, kontinuierliche Aufnahmen in der Mikroskopie durchzuführen, da die Photonenausbeute hierbei sehr gering sein kann. Daher kann hier die erfindungsgemäße Lösung den Vorteil bieten, eine kontinuierliche Probenrelativverschiebung anwendungssystemseitig zu ermöglichen. Je nachdem welche Belichtungszeit (Beleuchtungszeit oder Aufnahmezeit einer Kamera) hierbei genutzt wird, können als Probleme durch die kontinuierliche Probenrelativverschiebung bei der Eingabeerfassung 101 z. B. eine Bewegungsunschärfe und/oder ein Störeinfluss wie Rauschen auftreten und somit die Qualität der anwendungssystemseitigen Erfassungsinformation 110' beeinträchtigen. (Eine Reduzierung der Belichtungszeit kann dabei eine Reduzierung der Bewegungsunschärfe zur Folge haben). Um diese Qualitätseinbuße zu verringern, und dennoch die kontinuierliche Probenrelativverschiebung zu ermöglichen, kann mittels der Anlerninformation 200 die Zusatzinformation 115 anhand der Erfassungsinformation 110' ermittelt werden. Je nach Erfolg des Anlernens 130 kann diese Zusatzinformation 115 eine neue Erfassungsinformation 110' mit (mehr oder weniger) geringerer Beeinträchtigung bereitstellen. In anderen Worten kann die anwendungssystemseitige Erfassungsinformation 110' zunächst Rauschen und/oder Bewegungsunschärfe aufweisen, welche durch die Zusatzinformation 115 ggf. zumindest teilweise reduziert werden kann.

Optional kann die Eingabeerfassung 101 in der Art einer Eingabeerfassung 101 wenigstens einer Probe 2 mit Zellkernen durchgeführt werden. Somit kann die Eingabeaufzeichnung 110 aus der Aufzeichnung mehrerer Zellkerne resultieren. Die Zielaufzeichnung 112 kann als Ground Truth eine Segmentierung dieser Zellkerne repräsentieren. Neben dieser beispielhaften Ausführung ist auch eine Anwendung für andere Objekttypen und Fragestellungen als die (2D) Segmentierung denkbar, wie z. B. eine 3D-Segmentierung oder die Bildregression. Auch dabei können die beschriebenen Netzstruktur und Anlernstrategie verwendet werden. Es kann in diesen Fällen ebenfalls vorteilhaft sein, das Anlernen 130 für eine kontinuierliche Probenrelativverschiebung durchzuführen.

Ein beispielhaftes Anlernen 130 soll nachfolgend beschrieben werden. Gemäß einem ersten Anlernschritt kann die Probe 2 in der Form einer Zellprobe 2, bspw. mit DAPI (4',6-Diamidin-2-phenylindo) markierten Zellkernen, am Trainingssystem 4 bereitgestellt werden. Das Trainingssystem 4 kann somit als ein Fluoreszenzmikroskop ausgebildet sein. Anschließend kann gemäß einem zweiten Anlernschritt eine automatisierte und schrittweise Aufnahme der Eingabeaufzeichnung 110 der Probe 2 im Rahmen der Eingabeerfassung 101 erfolgen. Diese Aufnahme kann beim Fluoreszenzmikroskop im DAPI-Kanal mit (zu) geringer Belichtungszeit (z. B. 1 ms) durchgeführt werden, um auf diese Weise die Eingabeaufzeichnung 110 in der Form von Fluoreszenzbildern zu erhalten, welche von einem Störeinfluss (wie Rauschen) betroffen sind. Auch kann schrittweise im Rahmen der Zielerfassung 102 eine Aufnahme der Zielaufzeichnung 112 im DAPI-Kanal mit einer ausreichenden Belichtungszeit (z. B. 100 ms) durchgeführt werden, um hier gegenüber der Eingabeaufzeichnung 110 den Störeinfluss zu reduzieren. Auf diese Weise wird die Zusatzinformation 115 (als zusätzliche Bildinformation aufgrund der längeren Belichtungszeit) durch die Trainingstechnologie bereitgestellt. Allgemein gesprochen kann sich die Trainingstechnologie von der Anwendungstechnologie somit dadurch unterscheiden, dass die Zusatzinformation 115 durch eine längere Belichtungszeit bereitgestellt wird. Anschließend kann gemäß einem dritten Anlernschritt außerdem optional eine ein- oder zweidimensionale Segmentierung bei der Zielaufzeichnung 112 erfolgen, um den Ground Truth zu bestimmen. Neben der Segmentierung sind dabei auch weitere Anwendungen denkbar, wie eine Bildregression mit anschließender Analyse oder eine Probenklassifizierung für eine Klassifizierungsschätzung, welche als Ground Truth verwendet werden könnten. Auch eine Klassifizierung der segmentierten Objekte ist denkbar. Die voranstehenden Anlernschritte können wiederholt durchgeführt werden, auch an anderen Stellen der Probe oder anderen Proben, um einen ausreichend großen Trainingsdatensatz für das Anlernen 130 zu erhalten. Im vierten Anlernschritt kann insbesondere das Auswertungsmittel 60, vorzugsweise ein neuronales Netz, mit den auf diese Weise gewonnenen Trainingsdaten angelernt werden. Dieses kann somit auf DAPI-Bildern mit schlechtem Signal-Rausch-Verhältnis (S/N) als Eingabeerfassung und Segmentierungsmasken als Ground Truth basieren.

Gemäß einem weiteren optionalen Anwendungsschritt nach dem vierten Anlernschritt kann eine anwendungssystemseitige Erfassung 101' mit (zu) geringer Belichtungszeit (s. o., bspw. 1 ms) durch das Anwendungssystem 5 erfolgen. Bspw. kann hierzu als Anwendungssystem 5 ein Mikroskop ohne oder mit motorisierte Stage zum Einsatz kommen, um eine kontinuierliche Probenrelativverschiebung für die Erfassung 101' durchzuführen. Auf diese Weise können für verschiedene Positionen und in relativ kurzer Zeit durch die Probenrelativverschiebung die Erfassungsinformationen 110' bestimmt werden. Die Erfassung 101' kann bspw. bei gleichzeitiger automatischer linear kontinuierlicher verschobener Probe oder manuell kontinuierlich verschobener Probe durchgeführt werden.

Anschließend kann das angelernte Auswertungsmittel 60 verteilt 140 oder auf demselben Erfassungssystem genutzt werden. Dabei kann bspw. eine Segmentierungsmaske entsprechend der Qualität einer Zielerfassung mit ausreichender Belichtungszeit gewonnen werden. Das vorgenannte Vorgehen kann ggf. außerdem bei einer Durchflusszytometrie auf fließende Zellen angewandt werden.

Eine weitere optionale Ausgestaltung betrifft die Nutzung der Zusatzinformation im Falle einer erheblichen Bewegungsunschärfe, wenn eine längere Belichtungszeit für die Eingabeerfassung bzw. anwendungssystemseitige Erfassung 101' genutzt wird. Die längere Belichtungszeit kann auf diese Weise die Informationsdichte weiter erhöhen. Für diese Ausführungsvariante kann auch bei der Eingabeerfassung zum Anlernen 130 eine kontinuierliche Probenrelativverschiebung (also eine kontinuierliche relative Bewegung der Probe 2) durchgeführt werden. Hierzu kann nach dem vierten Anlernschritt ein optionaler fünfter Anlernschritt vorgesehen sein, bei welchem eine weitere Eingabeerfassung 101 der Probe 2 im DAPI Kanal erfolgt, um als weitere Eingabeaufzeichnung 110 Fluoreszenzbilder zu erhalten. Dabei kann außerdem eine weitere Zielerfassung 102 der Probe 2 im DAPI Kanal erfolgen, um als weitere Zielaufzeichnung 112 ebenfalls Fluoreszenzbilder zu erhalten Für beide Erfassungen 101, 102 kann die kontinuierliche Probenrelativverschiebung durchgeführt werden. Die weitere Eingabeerfassung 101 kann jedoch mit längerer Belichtungszeit erfolgen als die weitere Zielerfassung 102, sodass die weitere Eingabeaufzeichnung 110 eine starke Bewegungsunschärfe, aber auch hohe Informationsdichte, aufweisen kann. Zum Beispiel kann für die Eingabeerfassung 101 die Belichtungszeit 500 ms betragen. Mittels des zuvor angelernten Auswertungsmittels 60 (bzw. der entsprechend angelernten Anlerninformation 200 dieses Auswertungsmittels 60) kann nun die weitere Zielaufzeichnung 112 als anwendungssystemseitigen Erfassungsinformation 110' ausgewertet werden, um als Zusatzinformation 115 z. B. ein besseres S/N und/oder eine Segmentierungsmaske zu erhalten, und insbesondere um aus dem Ergebnis dieser Auswertung ein weiteres Ground Truth zu erhalten. Dieser Ground Truth und die weitere Eingabeaufzeichnung 110 können dann als Trainingsdaten genutzt werden, um das Auswertungsmittel 60 (erneut) anzulernen. Eine Besonderheit hierbei ist, dass als Ground Truth das Ergebnis einer Anwendung des zuvor angelernten Auswertungsmittels 60 genutzt wird, z. B. eine Segmentierung. Auf diese Weise kann eine anschließende anwendungssystemseitige Erfassung 101' mit langen Belichtungszeiten auf dem Anwendungssystem 5 durchgeführt werden, z. B. durch ein Mikroskop mit einer motorisierten Stage zur kontinuierlichen Probenrelativverschiebung, um die anwendungssystemseitige Erfassungsinformation 110' zu erhalten. Das erneut angelernte Auswertungsmittel 60 kann dann anwendungssystemseitig die Erfassungsinformation 110' auswerten, entweder nach einer Verteilung 140 oder auf dem gleichen Erfassungssystem. Auch die Nutzung für weitere Anwendungen (wie 3D-Segmentierung, Klassifizierung oder Bildregression) ist denkbar. Gemäß einer weiteren Verbessrung kann außerdem bei der anwendungssystemseitigen Erfassung 101' eine Richtungsinformation ermittelt werden. Hierzu kann z. B. eine Beleuchtung für die Erfassung 101' zeitlich moduliert und/oder asymmetrisch gepulst und vorzugsweise mit der Kamera (insbesondere Kamerasensor und insbesondere Monochromkamera für die Erfassung 101') synchronisiert wird. Eine weitere Möglichkeit ist die Nutzung einer Rheinbergbeleuchtung und Erfassung der Kamera in der Form einer RGB-Kamera zur Erzeugung einer räumlichen Asymmetrie, oder auch die Nutzung einer zur optischen Achse geneigten Erfassungsoptik, oder eine Kombination der Maßnahmen. Möglichkeiten zur Ermittlung der Richtungsinformation kann z. B. eine gepulste Beleuchtung oder eine ansteigend oder absteigende Beleuchtungsstärke oder eine andere Art der zeitlichen (zeitlich nicht symmetrischen) Modulation der Beleuchtung sein.

Gemäß einem weiteren Ausführungsbeispiel kann bei der Eingabeerfassung 101 auch eine (mit dem Kamerasensor asychron) gepulste Transmissionsbeleuchtung genutzt werden. Dabei kann die Belichtungszeit sehr kurz gewählt sein. So kann anstelle der Nutzung des zuvor beschriebenen DAPI Kanals für die Eingabeerfassung 101 auch die gepulste Transmissionsbeleuchtung genutzt werden. Auch ist es denkbar, dass für die anwendungssystemseitige Erfassung 101' mehrere Bilder der Probe als Erfassungsinformation 110' genutzt werden, welche in kurzer Abfolge und insbesondere nacheinander aufgenommen wurden. Damit kann auch eine Bewegungsrichtung für die Auswertung durch das Auswertungsmittel 60 genutzt werden. Der Ground Truth kann zudem optional auf eine Zielaufzeichnung 112 basieren, welche aus einer langen Belichtung erhalten wurde, oder externe Informationen über die Probe 2 aufweist (z. B. hinsichtlich einer Dosierung einer toxischen Substanz auf die Zellprobe 2), um die Schätzung einer toxischen Substanz durchzuführen. Auch kann der Ground Truth auf einer Klassifizierung von schrittweise aufgenommenen Bildern als Zielaufzeichnung 112 basieren, um eine entsprechende Klassifizierung auf kontinuierlich gewonnenen Bildern durch das angelernte Auswertungsmittel 60 bzw. der Anlerninformation 200 durchzuführen. Auch kann der Ground Truth auf einer klassifizierten Segmentierung und/oder 3D Segmentierung aus der Zielaufzeichnung 112 basieren. Ebenfalls ist der Einsatz für die Durchflusszytometrie denkbar, bei welcher der Ground Truth auf einer Zielaufzeichnung 112 basiert, welche bei langsamer Durchflusszeit erfasst wurde.

Ferner ist es denkbar, dass der Ground Truth und/oder die Zielaufzeichnung 112 durch eine der nachfolgenden Zielerfassungen 102 erhalten wird:
- eine Detektion, insbesondere Segmentierung oder Lokalisierung von Objekten und/oder Zellen der Probe 2, insbesondere eine Segmentierungsmaske,
- Segmentierung, z. B. ein Zellkompartiment, um ein Fluoreszenzsignal in diesem Bereich zu messen,
- Lokalisierung, z. B. zur Zählung,
- eine Schätzung der Klassifizierung oder Regression von Pixel oder Objekten oder Probenbereichen der Probe 2,
- Klassifizierung von einzelnen Bild-Pixeln,
- Klassifikation von ganzen Zellen oder Gewebebereichen,
- Regression von einzelnen Bild-Pixeln, z. B. Fluoreszenzeigenschaft, Phaseninformation,
- Regression, von ganzen Zellen oder Gewebebereichen,
- ein zytometrisches oder histologisches Analyseergebnis,
- eine Phaseninformation,
- eine dreidimensionale Information über die räumliche Struktur der Probe 2, z. B. ein z-Stapel für verschieden defokussierte Ebenen,
- wenigstens eine Fluoreszenzeigenschaft der Probe 2,
- ein erweiterter Schärfetiefenbereich einer Probenaufzeichnung, z. B. "Extended Focal Image".

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 2: Probe
- 4: Trainingssystem, Trainingsmikroskop
- 5: Anwendungssystem
- 8: Cloudsystem, zentrales Computersystem zum Cloud Computing

- 20: Abbildungsoptik, Erfassungsoptik

- 30: Lichtquelle, Beleuchtungsmittel
- 35: Kanäle

- 40: Detektionsvorrichtung, Kamera
- 45: Probenbewegungsvorrichtung, motorisierter Probentisch

- 50: Auswertevorrichtung, Computer
- 51: Prozessor
- 52: Datenspeicher

- 60: Auswertungsmittel

- 70: Netzstruktur
- 71: Merkmalskanal, Feature Map
- 72: Faltung 3x3, ReLu
- 73: Faltung 1x1
- 74: Downsampling, Max Pool 2x2
- 75: Aufwärtsfaltung, Up-conv 2x2

- 101: Eingabeerfassung, trainingssystemseitige Erfassung

- 101a: erste Eingabeerfassung
- 101b: zweite Eingabeerfassung
- 101c: dritte Eingabeerfassung
- 102: Zielerfassung, Referenzerfassung
- 110: Eingabeaufzeichnung
- 112: Zielaufzeichnung, Ground Truth
- 115: Zusatzinformation, Ergebnisinformation

- 120: Auswertung
- 130: Anlernen

- 140: Verteilen

- 200: Anlerninformation, Transferinformation, trainiertes Modell

- 101': anwendungssystemseitige Erfassung
- 110': anwendungssystemseitige Erfassungsinformation
- 110'a: erste Erfassungsinformation
- 110'b: zweite Erfassungsinformation
- 112': verarbeitete Zielaufzeichnung, Segmentierungsergebnis
- NN1: erstes Netz
- NN2: zweites Netz
- NN3: drittes Netz
- NN4: viertes Netz

## Patentansprüche

1. Verfahren zur Bereitstellung eines Auswertungsmittels (60) für wenigstens ein optisches Anwendungssystem (5) einer mikroskopbasierten Anwendungstechnologie,
wobei die nachfolgenden Schritte durchgeführt werden, insbesondere jeweils durch ein optisches Trainingssystem (4):
- Durchführen einer Eingabeerfassung (101) wenigstens einer Probe (2) gemäß der Anwendungstechnologie, um anhand der Eingabeerfassung (101) wenigstens eine Eingabeaufzeichnung (110) der Probe (2) zu erhalten,
- Durchführen einer Zielerfassung (102) der Probe (2) gemäß einer Trainingstechnologie, um anhand der Zielerfassung (102) wenigstens eine Zielaufzeichnung (112) der Probe (2) zu erhalten, wobei die Trainingstechnologie sich von der Anwendungstechnologie zumindest dadurch unterscheidet, dass eine Zusatzinformation (115) über die Probe (2) bereitgestellt wird,
- Anlernen (130) des Auswertungsmittels (60) zumindest anhand der Eingabeaufzeichnung (110) und der Zielaufzeichnung (112), um eine Anlerninformation (200) des Auswertungsmittels (60) zu erhalten,
wobei bei der Eingabeerfassung (101) und/oder bei der Zielerfassung (102) verschiedene Probenpositionen automatisiert erfasst werden,
wobei durch die Erfassung der verschiedenen Probenpositionen die Anlerninformation (200) für eine kontinuierliche Probenrelativverschiebung zur Ermittlung der Zusatzinformation (115) angelernt wird,
wobei die Eingabeerfassung (101) und die Zielerfassung (102) jeweils als trainingssystemseitige Erfassung (101,102) durch ein optisches Trainingssystem (4) durchgeführt werden,
und wobei die Anwendungstechnologie und Trainingstechnologie als eine Mikroskopie oder eine Durchflusszytometrie ausgeführt sind.

2. Verfahren nach Anspruch 1,
**dadurch gekennzeichnet,**
**dass** die Eingabeerfassung (101) sich von der Zielerfassung (102) zumindest dadurch unterscheidet, dass bei der Eingabeerfassung (101) durch eine relative Bewegung der Probe (2) die Eingabeaufzeichnung (110) beeinflusst wird, sodass die Anlerninformation (200) für zumindest eine Reduzierung dieser Beeinflussung und zusätzlich für die Ermittlung der Zusatzinformation (115) spezifisch ist, und/oder dass bei der Eingabeerfassung (101) und/oder bei der Zielerfassung (102) verschiedene Probenpositionen automatisiert erfasst werden, wobei die verschiedenen Probenpositionen durch eine automatisierte schrittweise und/oder kontinuierliche Probenrelativverschiebung erhalten werden, sodass die Anlerninformation (200) für die kontinuierliche Probenrelativverschiebung zur Ermittlung der Zusatzinformation (115) angelernt wird, wobei die Anlerninformation (200) so bestimmt wird, dass das auf diese Weise angelernte Auswertungsmittel (60) bei einer anschließenden anwendungssystemseitigen Auswertung zumindest näherungsweise die Zusatzinformation (115) bestimmt, wobei
das Anlernen (130) dadurch erfolgt, dass für das Auswertungsmittel (60) die Anlerninformation (200) durch Methoden des maschinellen Lernens bestimmt wird, wobei die Anlerninformation (200) ein Klassifikator oder ein Modell oder eine Gewichtung für das Auswertungsmittel (60) ist, und/oder wobei
bei dem Anwendungssystem (5), welches die Anwendungstechnologie in identischer oder ähnlicher Weise bereitstellt wie das Trainingssystem (4), die Zusatzinformation (115) nicht anhand der Anwendungstechnologie ermittelt wird, sondern nur anhand des Auswertungsmittels (60) zumindest näherungsweise bestimmt wird.

3. Verfahren nach Anspruch 1 oder 2,
**dadurch gekennzeichnet,**
**dass** bei der Eingabeerfassung (101) und/oder bei der Zielerfassung (102) eine vollständig automatisierte schrittweise oder kontinuierliche Probenrelativverschiebung, insbesondere relative Bewegung der Probe (2) durchgeführt wird, für welche die Anlerninformation (200) spezifisch angelernt wird.

4. Verfahren nach einem der vorhergehenden Ansprüchen,
**dadurch gekennzeichnet,**
**dass** bei der Eingabeerfassung (101) und bei der Zielerfassung (102) motorisiert eine vollständig automatisierte schrittweise oder kontinuierliche relative Bewegung der Probe (2) durchgeführt wird, um für eine Vielzahl von Objekten der Probe (2) und/oder für eine Vielzahl von Proben (2) jeweils wenigstens eine Eingabe- und Zielaufzeichnung (110, 112) als Trainingsdaten zum Anlernen (130) zu ermitteln, wobei anhand der Zielaufzeichnung (112) automatisiert ein Ground Truth für das Anlernen (130) bestimmt wird, insbesondere durch eine Referenzverarbeitung, vorzugsweise durch eine automatische Segmentierung.

5. Verfahren nach einem der vorhergehenden Ansprüchen,
**dadurch gekennzeichnet,**
**dass** die Zielaufzeichnung (112) und/oder die Eingabeaufzeichnung (110) jeweils Aufzeichnungen der Probe (2) an den unterschiedlichen Probenpositionen aufweisen, wobei bei der Eingabeerfassung (101) und/oder bei der Zielerfassung (102) während einer motorisiert durchgeführten automatisierten kontinuierlichen oder schrittweisen relativen Verschiebung der Probe (2) Positionsdaten über die Probenpositionen ermittelt werden, um anhand der Positionsdaten die Aufzeichnungen den Probenpositionen zuzuordnen.

6. Verfahren nach einem der vorhergehenden Ansprüchen,
**dadurch gekennzeichnet,**
**dass** die Anlerninformation (200) für die Ermittlung der Zusatzinformation (115) anhand einer anwendungssystemseitigen Erfassungsinformation (110') spezifisch ist, die durch eine anschließend durchgeführte anwendungssystemseitige Eingabeerfassung (101') durch ein optisches Anwendungssystem (5) ermittelt wird, bei welcher eine, insbesondere manuelle, kontinuierliche Probenrelativverschiebung erfolgt, wobei das Anwendungssystem (5) zur Bereitstellung der Anwendungstechnologie ausgeführt ist, und das Trainingssystem (4) zusätzlich zur Bereitstellung der Trainingstechnologie ausgeführt ist.

7. Verfahren nach einem der vorhergehenden Ansprüchen,
**dadurch gekennzeichnet,**
**dass** das Auswertungsmittel (60) als ein auf Maschinenlernen und/oder künstlicher Intelligenz und/oder Deep Learning basiertes Computerprogramm ausgeführt ist, und vorzugsweise ein oder mehrere künstliche neuronale Netze (NN1,NN2,NN3,NN4) gemäß einer Trainingshierarchie aufweist, wobei bevorzugt ein erstes (NN1) der Netze zur Ermittlung der Zusatzinformation (115) angelernt ist und zumindest ein zweites (NN2,NN3) der Netze zur Kompensation der kontinuierlichen Probenrelativverschiebung angelernt ist.

8. Verfahren nach einem der vorhergehenden Ansprüchen,
**dadurch gekennzeichnet,**
**dass** beim Anlernen (130) hierarchisch mehrere neuronale Netze des Auswertungsmittels (60) für jeweilige Verarbeitungen der Eingabeaufzeichnung (110) angelernt werden, und insbesondere das Auswertungsmittel (60) durch die Anlerninformation (200) zur Durchführung von wenigstens zwei Probenanalysen angelernt ist, welchen jeweils eines der dafür spezifischen neuronalen Netze des Auswertungsmittels (60) zugeordnet ist.

9. Verfahren nach einem der vorhergehenden Ansprüchen,
**dadurch gekennzeichnet,**
**dass** zur Eingabe- und Zielerfassung (101, 102) wenigstens eine Detektionsvorrichtung (40) und wenigstens ein Beleuchtungsmittel (30) eines Trainingssystems (4) verwendet werden, wobei
- bei der Eingabeerfassung (101) die Probe (2) in einem ersten Aufnahmemodus und/oder mit einer ersten Beleuchtungsintensität relativ zu dem Trainingssystem, insbesondere einer Erfassungsoptik (20), über mehr als ein gesamtes Detektionsfeld der Detektionsvorrichtung (40) kontinuierlich oder schrittweise zumindest relativ verschoben wird, um die Eingabeaufzeichnung (110) eines Bereichs der Probe (2) zu erhalten,
- bei der Zielerfassung (102) zumindest teilweise der gleiche Bereich der Probe (2) in einem zweiten Aufnahmemodus und/oder mit einer zweiten Beleuchtungsintensität erfasst wird, um die Zielaufzeichnung (112) zu erhalten,
- bei dem Anlernen (130) aus der Zielaufzeichnung (112) ein Ground Truth (112) bestimmt wird und aus der Eingabeaufzeichnung (110) Targetdaten bestimmt werden, welche zum Anlernen (130) wenigstens eines ersten neuronalen Netzes verwendet werden, um die Anlerninformation (200) zu bestimmen,
- optional: Anlernen (130) wenigstens eines weiteren neuronalen Netzes mittels des ersten neuronalen Netzes, um die Anlerninformation (200) zu bestimmen, welche für ein neuronales Netzsystem sämtlicher trainierter neuronaler Netze spezifisch ist,
- Anwenden des Auswertungsmittels (60) mit der Anlerninformation (200) bei einem Anwendungssystem (5) zur anwendungssystemseitigen Erfassung (101') in dem ersten Aufnahmemodus und/oder mit der ersten Beleuchtungsintensität, um eine anwendungssystemseitige Erfassungsinformation (110') zu erhalten, wobei hierzu wenigstens eine Probe (2) kontinuierlich über mehr als ein gesamtes Detektionsfeld einer weiteren Detektionsvorrichtung (40) zumindest relativ verschoben wird.

10. Verfahren nach einem der vorhergehenden Ansprüchen,
**dadurch gekennzeichnet,**
**dass** die Verfahrensschritte des Verfahrens zur Eingabe- und Zielerfassung (101, 102), und insbesondere auch bei der anwendungssystemseitigen Erfassung (101'), verschiedener Proben (2) und/oder Objekte der Probe (2) vollständig automatisiert durchgeführt werden, sodass hierbei auf jeglichen manuellen Eingriff verzichtet wird.

11. Verfahren nach einem der vorhergehenden Ansprüchen,
**dadurch gekennzeichnet,**
**dass** bei der Eingabe- und/oder Zielerfassung (101, 102) und/oder bei der anwendungssystemseitigen Erfassung (101'), verschiedene Tiefen der Probe (2) erfasst werden, sodass die Eingabeaufzeichnung (110) und/oder die Zielaufzeichnung (112) und/oder eine Erfassungsinformation (110') der anwendungssystemseitigen Erfassung (101') einen Stapel mit Aufnahmen der Probe (2) für axiale Probenpositionen aufweist, wobei vorzugsweise die verschiedenen Tiefen der Probe (2) dadurch erfasst werden, dass, insbesondere durch das Anwendungssystem (5), Probenbereiche der verschiedenen Tiefen auf verschiedene Bereiche eines Sensors einer Detektionsvorrichtung (40) abgebildet werden, wobei hierzu bevorzugt der Sensor hinsichtlich einer optischen Achse bei dem Anwendungssystem (5) geneigt angeordnet ist,
und/oder
**dass** die Eingabeerfassung (101) und/oder Zielerfassung (102) und/oder weitere Zielerfassungen (102) für das Anlernen (130) durch unterschiedliche Kanäle (35) des Trainingssystems (4) gleichzeitig oder zeitlich versetzt für unterschiedliche Probenpositionen durchgeführt werden.

12. System zur Bereitstellung eines Auswertungsmittels (60) für wenigstens ein optisches Anwendungssystem (5) einer mikroskopbasierten Anwendungstechnologie, insbesondere gemäß einem Verfahren nach einem der Ansprüche 1 bis 11, aufweisend:
- wenigstens eine Detektionsvorrichtung (40) zum Durchführen einer Eingabeerfassung (101) wenigstens einer Probe (2) gemäß der Anwendungstechnologie, um anhand der Eingabeerfassung (101) wenigstens eine Eingabeaufzeichnung (110) der Probe (2) zu erhalten,
- die oder wenigstens eine weitere Detektionsvorrichtung (40) zum Durchführen einer Zielerfassung (102) der Probe (2) gemäß einer Trainingstechnologie, um anhand der Zielerfassung (102) wenigstens eine Zielaufzeichnung (112) der Probe (2) zu erhalten, wobei die Trainingstechnologie sich von der Anwendungstechnologie zumindest dadurch unterscheidet, dass die Trainingstechnologie zur Bereitstellung einer Zusatzinformation (115) über die Probe (2) ausgeführt ist,
- eine Auswertevorrichtung (50) zum Anlernen (130) des Auswertungsmittels (60) zumindest anhand der Eingabeaufzeichnung (110) und der Zielaufzeichnung (112), um eine Anlerninformation (200) des Auswertungsmittels (60) zu erhalten,
- eine Probenbewegungsvorrichtung (45) zur relativen Verschiebung der Probe (2), um bei der Eingabeerfassung (101) und/oder bei der Zielerfassung (102) verschiedene Probenpositionen automatisiert zu erfassen,
wobei durch die Erfassung der verschiedenen Probenpositionen die Anlerninformation (200) für eine kontinuierliche Probenrelativverschiebung zur Ermittlung der Zusatzinformation (115) angelernt wird,
wobei die Eingabeerfassung (101) und die Zielerfassung (102) jeweils als trainingssystemseitige Erfassung (101,102) durch ein optisches Trainingssystem (4) durchgeführt werden,
und wobei die Anwendungstechnologie und Trainingstechnologie als eine Mikroskopie oder eine Durchflusszytometrie ausgeführt sind.

13. Computerprogramm, umfassend Befehle, die bei der Ausführung des Computerprogramms durch einen Computer (50) diesen veranlassen, anhand wenigstens einer Eingabeaufzeichnung (110) der Probe (2) und anhand einer Anlerninformation (200) eine Zusatzinformation (115) über eine Probe (2) zu ermitteln, wobei die Eingabeaufzeichnung (110) spezifisch ist für eine Eingabeerfassung (101) der Probe (2) gemäß einer Anwendungstechnologie und die Anlerninformation (200) nach einem der Ansprüche 1 bis 11 ermittelt ist.

14. Computerprogramm, umfassend Befehle, die bei der Ausführung des Computerprogramms durch einen Computer (50) diesen veranlassen, die Schritte eines Verfahrens nach einem der Ansprüche 1 bis 11 auszuführen.

15. Computerlesbares Medium, auf dem das Computerprogramm nach Anspruch 13 oder 14 gespeichert ist.
